# EUROPÄISCHE PATENTSCHRIFT

(11) **EP 2 796 304 B1**
(45) Veröffentlichungstag und Bekanntmachung des Hinweises auf die Patenterteilung: **04.04.2018**
(21) Anmeldenummer: 14400030.4
(22) Anmeldetag: 17.04.2014
(51) Int. Cl.: B60D 1/54

(54) **Anhängekupplung**
Tow bar
Attelage

(30) Priorität: 21.04.2013 DE 102013007111
(43) Veröffentlichungstag der Anmeldung: 29.10.2014
(73) Patentinhaber: WESTFALIA - Automotive GmbH, 33378 Rheda-Wiedenbrück (DE)
(72) Erfinder: Raimund Hetfleisch, D-33129 Delbrück-Boke (DE)
(74) Vertreter: Patentanwälte Bregenzer und Reule Partnerschaftsgesellschaft mbB

(56) Entgegenhaltungen:
- EP-A1- 1 533 149
- EP-A1- 1 557 300
- EP-A1- 1 894 752
- DE-U1- 20 215 508

## Beschreibung

Die Erfindung betrifft eine Anhängekupplung für ein Kraftfahrzeug, mit einem Kupplungsarm zum Ankuppeln eines Anhängers oder eines Hecklastenträgers gemäß dem Oberbegriff des Anspruchs 1.

Eine derartige Anhängekupplung ist beispielsweise aus DE 202 15 508 U1 bekannt.

Eine weitere Anhängekupplung ist beispielsweise aus EP 1 533 149 A1 bekannt. Die Anhängekupplung umfasst beispielsweise einen fahrzeugseitigen Lagerflansch als einen Gegenhaltkörper, an welchem Kugelkalotten und somit Gegen-Formschlusskonturen vorgesehen sind, in die als Formschlusskonturen verwendete Kugeln, die an einem Lagerelement und somit einem Fixierelement angeordnet sind, in der Fixierstellung eingreifen. Die Verwendung derartiger Formschlusskonturen ist hinsichtlich eines Lösens der Formschlussverbindung optimal. Damit der Formschluss aufrechterhalten werden kann, muss das Fixierelement fest an den Gegenhaltkörper gespannt werden.

Es ist daher die Aufgabe der vorliegenden Erfindung, ein alternatives Formschlusskonzept zum formschlüssigen Halten eines Kupplungsarms einer Anhängekupplung in der Fixierstellung bereitzustellen.

Zur Lösung der Aufgabe ist eine Anhängekupplung gemäß der technischen Lehre des Anspruchs 1 vorgesehen.

Es ist dabei ein Grundgedanke, dass das Fixierelement ein bewegliches Bauteil bildet, also vom Lagerelement separat ist, und mindestens zwei, vorzugsweise mehr, Formschlusskonturen in Fixiereingriff bringen kann. Eine Linearbewegung entlang der Stellachse, beispielsweise einer Schwenkachse des Lagerelements, ist zwar bevorzugt. Es ist aber auch möglich, dass die Formschlusskonturen anhand einer Drehbewegung oder einer überlagerten Drehbewegung oder Schwenkbewegung und einer linearen Bewegung in Eingriff miteinander gelangen.

Vorteilhaft ist vorgesehen dass das Fixierelement oder der mindestens eine Gegenhaltkörper eine Aufnahmevertiefung, insbesondere eine Aufnahmemulde, für einen Eingriff des jeweils anderen Elements von Gegenhaltkörper oder Fixierelement aufweist. Durch die Aufnahmevertiefung, die beispielsweise als eine Aufnahmemulde ausgestaltet ist, kann ein besonders günstiger und fester Halt erzielt werden. Eine vorteilhafte Maßnahme sieht vor, dass sich von der Aufnahmevertiefung des Fixierelements ein insbesondere ringförmiger Stützkragen erstreckt. Der Stützkragen kann weitere Haltefunktionen erfüllen, beispielsweise indem am Stützkragen mindestens eine Formschlusskontur vorgesehen ist und/oder der Stützkragen einen Rand darstellt, der klemmbar ist oder als Klemmteil wirken kann. Das wird später noch deutlich.

Die Formschlusskonturen und Gegen-Formschlusskonturen umfassen vorzugsweise, insbesondere bei einer Anhängekupplung gemäß dem Oberbegriff des Anspruches 1, was an sich eine eigenständige Erfindung entspricht, eine Längsgestalt aufweisende Rippen und Aufnahmenuten zur Aufnahme der Rippen. Vorteilhaft sind aber auch keilförmige oder kugelförmige Vorsprünge und zugehörige Aufnahmen, beispielsweise kugelförmige Vorsprünge und kugelförmige Aufnahmen zur Aufnahme der kugelförmigen Vorsprünge oder keilförmige Formschlusskonturen und Gegen-Formschlusskonturen möglich.

Die Rippen oder kugeligen Vorsprünge können beispielsweise am Fixierelement, die Aufnahmenuten oder kugelförmigen Aufnahmen am Gegenhaltkörper oder umgekehrt vorgesehen sein. Es ist aber auch möglich, dass der Gegenhaltkörper und das Fixierelement jeweils beides umfassen, d.h. Rippen und Aufnahmenuten und/oder Kugeln und kugelige Aufnahmen. Die Kugelform kann beispielsweise von Kugelkörpern oder Kugelkalotten gebildet sein, aber auch an bolzenartigen Vorsprüngen vorgesehen sein, die frontseitig kugelig sind.

Es ist ein Grundgedanke bei dieser Anhängekupplung, dass die Rippen und Aufnahmenuten sich gegenüberliegende, eine Längsgestalt aufweisende Seitenflanken, also Außenwände und Innenwände, aufweisen, so dass in Schwenkrichtung ein optimaler Halt möglich ist.

Die Rippen und die zugeordneten Aufnahmenuten verlaufen quer, zum Beispiel radial, zu der Stellachse. Es versteht sich, dass die Rippen und Aufnahmenuten nicht unbedingt radial verlaufen müssen, sondern auch schräg zu Radiallinien stehen können.

Es ist möglich, dass die Rippen auch einen bezüglich einer von der Stellachse durchsetzten Ebene gekrümmten oder winkeligen Verlauf haben, d.h. beispielsweise in einer Draufsicht und/oder einer Seitenansicht gekrümmt oder winkelig sind, das heißt beispielsweise bogenförmig oder L-förmig sind.

Die Rippen und/oder die Aufnahmenuten sind zweckmäßigerweise im Querschnitt U-förmig. Vorteilhaft ist es, wenn die Rippen und/oder die Aufnahmenuten zu mindestens einem Längsendbereich hin flach auslaufen, z.B. gegenüber einer benachbarten Fläche, beispielsweise des vorher erläuterten Stützkragens.

Es ist zwar möglich, dass die Formschlusskonturen und Gegen-Formschlusskonturen, insbesondere die Rippen und Aufnahmenuten oder die kugeligen Vorsprünge und kugeligen Aufnahmen, in Winkelstellungen des Fixierelements und des Gegenhaltkörpers zwischen der Gebrauchsstellung und der Nichtgebrauchsstellung ineinander passen.

Es ist aber auch möglich, dass die Formschlusskonturen und Gegen-Formschlusskonturen, z.B. die Rippen und die Aufnahmenuten, am Fixierelement und Gegenhaltkörper so angeordnet und ausgestaltet sind, dass sie nur in einer der Gebrauchsstellung und/oder der Nichtgebrauchsstellung entsprechenden Position von Fixierelement und Gegenhaltkörper ineinander passen und in dazwischen liegenden Zwischenstellungen eine Verstellung des Fixierelement und des Gegenhaltkörper zueinander hin in Richtung der Fixierstellung verhindern. Das kann man beispielsweise dadurch erreichen, dass die Formschlusskonturen und die Gegen-Formschlusskonturen, zum Beispiel die Rippen und Aufnahmenuten oder die kugeligen Formschlusskonturen, in vordefinierten, nur der Gebrauchsstellung oder der Nichtgebrauchsstellung entsprechenden Winkelabständen zueinander positioniert sind. Auch die Geometrien jeweils zueinander passender Paarungen von Formschlusskontur und Gegenformschlusskontur, also beispielsweise Aufnahmenut und Rippe, Krümmungsgeometrien der kugeligen Vorsprünge, Schrägflächen von keilförmigen Aufnahmen und Vorsprüngen, können so ausgestaltet sein, dass das Fixierelement und der Gegenhaltkörper nur dann ineinander passen, wenn die einander zugeordneten, korrelierende Geometrien aufweisenden Paare von Rippen und Aufnahmenuten einander gegenüberliegen, also entsprechend der Gebrauchsstellung oder Nichtgebrauchsstellung positioniert sind.

Die Formschlusskonturen und Gegen-Formschlusskonturen, zum Beispiel die kugeligen Vorsprünge und Aufnahmen und/oder die Rippen und Aufnahmenuten, sind zweckmäßigerweise so ausgestaltet, dass sie im Sinne eines Zentrierens desjenigen Lagerelements, das den Kupplungsarm trägt, in der Fixierstellung wirken. Mithin nimmt also beispielsweise der Kupplungsarm in der Fixierstellung eine exakt der Gebrauchsstellung oder der Nichtgebrauchsstellung entsprechende Stellung ein. Die Zentrierung erfolgt beispielsweise dahingehend, dass sich das Lagerelement entlang der Stellachse ausrichtet. Bevorzugt haben die Formschlusskonturen und/oder die Gegen-Formschlusskonturen einen trichterförmigen oder bogenförmigen oder konischen Verlauf, insbesondere einen Schrägverlauf, was eine besonders günstige Zentrierung ermöglicht.

Eine zweckmäßige Ausführungsform der Erfindung sieht vor, dass sich die Formschlusskonturen und/oder die Gegen-Formschlusskonturen, also beispielsweise die Rippen und/oder Aufnahmenuten oder auch die kugeligen oder keilförmigen Formschlusselemente, zumindest teilweise in einer Aufnahmevertiefung und/oder an einer sich neben der Aufnahmevertiefung befindlichen Stirnseiten-Stützfläche des Fixierelements oder des Gegenhaltkörpers befinden. Das Fixierelement hat also beispielsweise eine Aufnahmevertiefung in der Art einer Mulde, in die der Gegenhaltkörper teilweise hineinpasst. In der Aufnahmevertiefung oder an der Stirnseiten-Stützfläche oder beiden befinden sich dann Rippen oder Aufnahmenuten oder beides, die eine Fixierung der beiden in Eingriff miteinander befindlichen Komponenten, des Fixierelements und des Gegenhaltkörper, ermöglichen.

Eine bevorzugte Ausführungsform der Erfindung sieht vor, dass sich die Rippen und/oder die Aufnahmenuten, jedenfalls die Formschlusskonturen und/oder die gegen-Formschlusskonturen, über einen Kantenbereich zwischen der Aufnahmevertiefung und einer sich neben der Aufnahmevertiefung befindlichen Stirnseiten-Stützfläche hinweg erstrecken. Die Rippen oder Aufnahmenuten laufen also über den Kantenbereich hinweg.

Der Kantenbereich weist zweckmäßigerweise eine Rundung auf. Es ist aber auch möglich, dass eine eckige Kante zwischen der Aufnahmevertiefung und der Stirnseiten-Stützfläche vorhanden ist. Auch in dieser Ausgestaltung ist es auch möglich, dass sich beispielsweise die Rippen oder Aufnahmenuten mit einer Rundung über die an sich eckige Kante hinweg erstrecken.

Der mindestens eine Gegenhaltkörper umfasst zweckmäßigerweise das den Kupplungsarm tragende Lagerelement. Auch ein Stützteil des Fahrzeughalteteils kann den oder einen Gegenhaltkörper bilden.

Bei dem Stützteil handelt es sich beispielsweise um einen Stützvorsprung oder Stützflansch, insbesondere um einen teilringförmigen, in einen Zwischenraum zwischen dem Lagerelement und dem Fixierelement eingreifenden Flanschabschnitt oder Plattenabschnitt, der Fahrzeughalterung.

Das Fixierelement und/oder ein Stützteil des Fahrzeug-Halteteils weist vorteilhaft eine Durchtrittsöffnung für den Lagerbasiskörper, insbesondere eine Lagerwelle oder Hohlwelle, auf.

Es ist es dabei zweckmäßig, wenn sich die Formschlusskonturen und/oder Gegen-Formschlusskonturen ringförmig oder teilringförmig um die jeweilige Durchtrittsöffnung herum erstrecken.

Das mindestens eine Fixierelement wirkt zweckmäßigerweise mit zwei Gegenhaltkörpern zusammen, wobei das Fixierelement in der Fixierstellung mit einem ersten der Gegenhaltkörper zusammenwirkend eine Klemmaufnahme für den zweiten Gegenhaltkörper begrenzt. Die Klemmaufnahme kann beispielsweise von einander entgegengesetzten oder gegenüberliegenden Seiten her den zweiten Gegenhaltkörper klemmen. Es ist möglich, dass das mindestens eine Fixierelement in nur einen der Gegenhaltkörper formschlüssig eingreift, aber auch dass es in beide Gegenhaltkörper eingreift, d.h. dass eine Formschlusskontur des Fixierelements in Gegen-Formschlusskonturen von einem oder beiden Gegenhaltkörpern formschlüssig eingreift. Es ist also auch möglich, dass nur einer der Gegenhaltkörper formschlüssig, der andere in einem Klemmsitz gehalten wird.

Die Klemmaufnahme weist zweckmäßigerweise Schrägflächen auf. Auch der in der Klemmaufnahme sitzende Gegenhaltkörper kann Schrägflächen aufweisen. Durch diese Maßnahme kann ein Keileffekt oder Klemmeeffekt bewirkt werden, d.h. dass die Verklemmung durch die Schrägflächen sogar noch verstärkt wird.

Es ist weiterhin möglich, dass das mindestens eine Fixierelement an dem Gegenhaltkörper direkt an dem Gegenhaltkörper anliegt, mit dem es zusammen die Klemmaufnahme begrenzt. Beispielsweise ist die Klemmaufnahme eine Art zangenartige oder seitlich offene Aufnahme, in die der zu klemmende Gegenhaltkörper von der Seite her eingreift. Die Innenseiten dieser Klemmaufnahme können schräg verlaufen, was zu einem besseren Verklemmen beitragen kann.

Eine bevorzugte Ausführungsform sieht vor, dass das Fixierelement mit zwei Gegenhaltkörpern zusammenwirkt, von denen einer das den Kupplungsarm tragende Lagerelement, das andere das Stützteil des Fahrzeughalteteils ist.

Eine zweckmäßige Variante sieht vor, dass das mit zwei Gegenhaltkörpern zusammenwirkende Fixierelement mit einer einzigen Formschlusskontur in Abschnitte zweier Gegen-Formschlusskonturen an den beiden Gegenhaltkörpern oder eine durch zwei Abschnitte an den Gegenhaltkörpern gebildete Gegen-Formschlusskontur eingreift.

Es ist beispielsweise vorteilhaft vorgesehen, dass eine an dem mindestens einen Fixierelement vorgesehene Rippe oder eine dort vorgesehene Aufnahmenut mit einer Aufnahmenut oder eine Aufnahmerippe formschlüssig zusammenwirkt, die durch ineinander übergehende Aufnahmenut-Abschnitte oder Aufnahmerippen-Abschnitte an einem ersten und einem zweiten Gegenhaltkörper zusammenwirkt. Die beiden Gegenhaltkörper werden beispielsweise durch das Stützteil des Fahrzeughalteteils und das den Kupplungsarm tragende Lagerelement gebildet.

Das mindestens eine Fixierelement und der mindestens eine Gegenhaltkörper umfassen zweckmäßigerweise einen Ring oder eine Hülse oder auch einen Plattenkörper. Das Fixierelement oder der Gegenhaltkörper oder beide können auch tellerförmig sein oder einen Teller umfassen. Weiterhin ist es möglich, dass das Fixierelement und der Gegenhaltkörper flanschartig ausgestaltet sind oder einen Flansch umfassen.

Das Fahrzeug-Halteteil umfasst vorteilhaft ein insbesondere flanschartiges und/oder plattenartiges Stützteil, das in der Fixierstellung zwischen dem Fixierelement und dem mindestens einen Gegenhaltkörper oder dem den Kupplungsarm tragenden Lagerelement gehalten, insbesondere geklemmt, wird.

Die Fixiereinrichtung umfasst zweckmäßigerweise eine Zangenhalterung, die einen ersten, von dem mindestens einen Fixierelement gebildeten Zangenschenkel und einen zweiten Zangenschenkel aufweist, die in der Fixierstellung aufeinander zu bewegt sind und das den Kupplungsarm tragende Lagerelement an der fahrzeugfesten Fahrzeughalterung fixieren. Beispielsweise wird der zweite Zangenschenkel von einem Lagerelement, insbesondere dem den Kupplungsarm tragenden Lagerelement, gebildet. Zwischen den beiden Zangenschenkeln kann das bereits erwähnte Stützteil angeordnet sein. Die Zangenschenkel klemmen sich sozusagen an dem fahrzeugfesten Bauteil fest oder dieses zumindest formschlüssig sozusagen in die Zange.

Das Lagerbasisteil umfasst zweckmäßigerweise einen von dem Fahrzeughalterungsteil abstehenden Lagervorsprung und/oder eine Lageraufnahme. Der Lagervorsprung umfasst beispielsweise eine Lagerwelle oder einen Lagerzapfen. Es ist aber auch möglich, dass das Lagerbasisteil eine Lageraufnahme, beispielsweise eine hülsenartige Lageraufnahme, umfasst. Weiterhin ist es möglich, dass das Lagerbasisteil einen in einer Lageraufnahme angeordneten Lagervorsprung aufweist, in welche das jeweilige Lagerteil eingreift.

Bei dem den Kupplungsarm tragenden Lagerelement oder einem dieses lagernden Lagerelement oder beiden ist es vorteilhaft, wenn es einen Hülsenkörper umfasst. Mithin ist also eine zwiebelartige oder geschachtelte Konstruktion vorteilhaft. Das äußere Lagerelement kann das innere Lagerelement kapseln.

Es ist ferner möglich, dass der Kupplungsarm und das diesen tragende Lagerelement voneinander separate Bauelemente sind, die fest miteinander verbunden sind. Es ist aber auch möglich, dass die beiden Bauteile einstückig sind. Weiterhin ist es zweckmäßig, wenn das den Kupplungsarm tragende Lagerelement von einem Lagerkopf gebildet ist oder einen solchen aufweist.

Das mindestens eine Fixierelement kann ein Klemmelement bilden oder umfassen. Bevorzugt ist es, wenn das mindestens eine Fixierelement eine Formschlusskontur zum formschlüssigen Fixieren aufweist.

An dem Kupplungsarm ist vorzugsweise ein Kuppelstück, zum Beispiel eine Kupplungskugel zur Zusammenwirkung mit einer Zugkugelkupplung eines Anhängers vorgesehen. Für die Verbindung mit einem Heckträger eignet sich die vorgenannte Kugel selbstverständlich auch. Es kann aber auch eine Steckaufnahme oder eine sonstige, insbesondere Steckmittel umfassende, Heckträger-Halterung zum Anbringen eines nach hinten vor das Heck des Kraftfahrzeugs im montierten Zustand vorstehenden Lastenträgers vorgesehen sein.

Vorteilhaft ist vorgesehen, dass dem Fahrzeughalterungsteil eine Führungsanordnung zur Führung der Schwenkbewegung des mindestens einen zweiten Schwenk-Lagerelements zwischen der Gebrauchsstellung und der Nichtgebrauchsstellung gegenüberliegt.

Es ist ein Grundgedanke dabei, dass quasi dem Fahrzeughalterungsteil gegenüberliegend die Führung stattfindet, also beispielsweise an einem Kopfbereich der Anhängekupplung bzw. des Lagers, so dass der Fußbereich, also der Bereich des Fahrzeughalterungsteils, für andere Aufgaben, beispielsweise für eine Fixierung des Kupplungsarms in der Gebrauchsstellung und/oder der Nichtgebrauchsstellung, bereitsteht.

Es ist auch möglich, dass die Führungsanordnung zwischen beispielsweise einem Kopfbereich des Lagerbasiskörpers und der Fahrzeughalterung angeordnet ist oder dort angeordnete Führungskomponenten umfasst.

Die Führungsanordnung umfasst beispielsweise erste und zweite Führungskomponenten, die miteinander Wechsel wirken.

Durch die günstige Anordnung der Führungsanordnung ergeben sich viele konstruktive Freiheitsgrade.

Vorzugsweise ist vorgesehen, dass die Führungsanordnung die Bewegung des Schwenk-Lagerelements mehrachsig und bezüglich der ersten und der mindestens einen zweiten Schwenkachse führt. Selbstverständlich könnte auch eine weitere, zum Beispiel dritte Schwenkachse vorhanden sein.

Es versteht sich, dass zwischen dem ersten und dem mindestens einen zweiten Schwenk-Lagerelement ein drittes Lagerelement, zum Beispiel ein an dem ersten Lagerelement verschieblich gelagertes und das zweite Lagerelement schwenkbar lagerndes Lagerelement, vorgesehen sein kann.

Die Führungsanordnung kann in einer Ausführungsform zu einer mittelbaren Führung des mindestens einen Schwenk-Lagerelements ausgestaltet sein, d.h. dass es beispielsweise eine mit dem Schwenk-Lagerelement verbundene oder bewegungsgekoppelte, zum Beispiel drehgekoppelte Komponente, der Anhängekupplung führt. Es ist ferner möglich, dass die Führungsanordnung zur Führung des zweiten Schwenk-Lagerelements anhand einer Führung des ersten Schwenk-Lagerelements zumindest über einen Teilabschnitt der Bewegung zwischen der Gebrauchsstellung und der Nichtgebrauchsstellung ausgestaltet ist. Mithin muss also die Führungsanordnung nicht in direktem Führungseingriff mit dem zweiten Schwenk-Lagerelement sein. Es ist auch möglich, dass die Führung sozusagen mittelbar erfolgt, zum Beispiel durch einen Führungseingriff der Führungsanordnung mit dem ersten Schwenk-Lagerelement.

Bevorzugt ist es, wenn die Führungsanordnung zur unmittelbaren Führung des mindestens einen zweiten Schwenk-Lagerelements ausgestaltet ist. Die Führung kann über den gesamten Weg zwischen der Gebrauchsstellung und der Nichtgebrauchsstellung oder auch über einen Teilabschnitt der Bewegung erfolgen.

Die Führungsanordnung umfasst zweckmäßigerweise einen Kulissenfolger und eine Führungskulissenfläche, an welcher der Kulissenfolger entlang beweglich gelagert ist. Der Kulissenfolger kann beispielsweise eine an der Führungskulissenfläche gleitbar gelagerte Gleitkulissenfläche oder mindestens einen drehbar gelagerten und an der Führungskulissenfläche abrollenden Führungsrollenkörper oder Führungswälzkörper umfassen.

Es versteht sich, dass auch zwei Führungskulissenflächen vorgesehen sein können, nämlich einerseits am führenden und andererseits am geführten Bauteil, zwischen denen dann ein Wälzkörper oder mehrere Wälzkörper angeordnet sind, um die Bewegung der einen Führungskulissenfläche an der anderen Führungskulissenfläche entlang zu ermöglichen. Der Wälzkörper läuft sozusagen an zwei einander gegenüberliegenden Führungskulissenflächen entlang.

Die Führungsanordnung ist zweckmäßigerweise zwischen dem Lagerbasiskörper und dem zweiten Lagerelement oder einem mit dem zweiten Lagerelement fest verbundenen Körper angeordnet. Beispielsweise hat der Lagerbasiskörper einen Fuß-Endbereich, mit dem er mit dem Fahrzeughalterungsteil verbunden ist und einen zu dem Fuß-Endbereich entgegengesetzten Kopf-Endbereich, der vor das erste und mindestens eine zweite Schwenk-Lagerelement vorsteht. Am Kopf-Endbereich befindet sich mindestens eine erste Führungskomponente der Führungsanordnung, beispielsweise die Führungskulissenfläche, die mit mindestens einer zweiten, an dem mindestens einen zweiten Schwenk-Lagerelement angeordneten Führungskomponente zusammenwirken. Am zweiten Schwenk-Lagerelement befindet sich beispielsweise die Gleitkulissenfläche oder auch ein Führungskulissenkörper.

Das zweite Schwenk-Lagerelement umfasst zweckmäßigerweise einen Deckel, der vor dem Kopf-Endbereich des Lagerbasiskörpers angeordnet ist. Die Führungsanordnung ist zweckmäßigerweise zwischen dem Deckel und dem Kopf-Endbereich des Lagerbasiskörpers angeordnet. Der Deckel haust beispielsweise die Führungsanordnung ein oder bildet einen Bestandteil eines Gehäuses für die Führungsanordnung.

Der Lagerbasiskörper weist zweckmäßigerweise einen Wellenkörper und/oder Rohrkörper und/oder Zylinderkörper auf.

In einem Innenraum des Lagerbasiskörpers ist zweckmäßigerweise ein Antriebselement einer Fixiereinrichtung zum Fixieren des Kupplungsarms in der Gebrauchsstellung und/oder der Nichtgebrauchsstellung angeordnet.

Das erste Schwenk-Lagerelement ist zweckmäßigerweise an dem Lagerbasiskörper, der wie gesagt vorzugsweise eine Welle umfasst, um die erste Schwenkachse schwenkbar gelagert. Das erste und das mindestens eine zweite Schwenk-Lagerelement sind zur Bildung eines Kardangelenks z.B. anhand mindestens eines Achselements miteinander drehbeweglich gekoppelt. Es ist aber auch möglich, dass das zweite Schwenk-Lagerelement an dem ersten Schwenk-Lagerelement über sphärische Flächen zur Bildung eines Taumellagers oder eines kugelgelenkig lagernden Lagers gelagert ist.

Das erste Schwenk-Lagerelement ist beispielsweise an dem Lagerbasiskörper ausschließlich schwenkbar gelagert. Es ist aber auch möglich, dass das erste Schwenk-Lagerelement an dem Lagerbasiskörper schwenkbar und zudem entlang der Schwenkachse verschieblich gelagert ist. Selbstverständlich könnte auch das zweite Schwenk-Lagerelement an dem ersten Schwenk-Lagerelement nur ausschließlich schwenkbar oder auch schwenkbar und entlang der Schwenkachse verschieblich gelagert sein.

Das Fahrzeughalterungsteil umfasst zweckmäßigerweise mindestens eine fahrzeugfeste Formschlusskontur zum formschlüssigen Fixieren des Kupplungsarms in der Gebrauchsstellung oder der Nichtgebrauchsstellung.

Zwischen dem ersten und/oder mindestens zweiten Schwenk-Lagerelement und dem Fahrzeughalterungsteil ist vorzugsweise eine Lagerfläche oder eine zumindest dem jeweiligen Lagerelement gegenüberliegende Fläche, und/oder eine Formschlusskontur zum formschlüssigen Halten des Kupplungsarms in der Gebrauchsstellung oder der Nichtgebrauchsstellung angeordnet.

Die Führungsanordnung ist abseits und entfernt von der Lagerfläche und der Formschlusskontur vorgesehen und angeordnet. Mithin stört also die Führungsanordnung beispielsweise die Lagerung nicht bzw. ist soweit von der Lagerung oder den Formschlusskonturen entfernt, dass diese im Prinzip konstruktiv beliebig ausgestaltet sein können.

Eine Fixiereinrichtung zum ortsfesten Fixieren des Kupplungsarms in der Gebrauchsstellung und/oder der Nichtgebrauchsstellung ist zweckmäßigerweise, wie erwähnt, Bestandteil der Anhängekupplung. Die Fixiereinrichtung umfasst zweckmäßigerweise mindestens ein zwischen einer Fixierstellung zum Fixieren des Kupplungsarms und einer Lösestellung, in welcher der Kupplungsarm beweglich ist, bewegbares Fixierelement sowie den ebenfalls schon erwähnten Fixierantrieb zum Antreiben des mindestens einen Fixierelements. Das Fixierelement und die Führungsanordnung sind zweckmäßigerweise an einander entgegengesetzten Seiten des durch die Führungsanordnung geführten ersten und/oder mindestens einen zweiten Schwenk-Lagerelement vorgesehen. Auch hier ergeben sich wiederum konstruktive Vorteile.

Das Fixierelement ist zweckmäßigerweise in der Fixierstellung mit dem den Kupplungsarm tragenden mindestens einen zweiten Schwenk-Lagerelement in unmittelbarem, zum Beispiel formschlüssigen und/oder reibschlüssigen und/oder einen Klemmsitz herstellenden Eingriff. Der letzte Variante sieht also vor, dass das Fixierelement das zweite Schwenk-Lagerelement klemmt.

Vorteilhaft ist vorgesehen, dass der Fixierantrieb zumindest teilweise in einem Innenraum des Lagers angeordnet ist und das mindestens eine Fixierelement außerhalb des Lagers angeordnet ist und durch den Fixierantrieb aus dem Innenraum des Lagerelements heraus antreibbar ist.

Das Konzept sieht also vor, dass in Platz sparender Weise der Fixierantrieb zumindest teilweise im Innenraum des Lagers angeordnet ist und quasi vom Innenraum des Lagers her das außerhalb des Lagers angeordnete Fixierelement antreibt. Bei dem Fixierelement kann es sich beispielsweise um einen Verriegelungsbolzen oder eine Verriegelungskugel oder, wie später noch deutlich wird, um einen Verriegelungsring oder Verriegelungsteilring handeln.

Es versteht sich, dass sich das erfindungsgemäße Konzept dazu eignet, ein einziges Fixierelement anzutreiben, aber auch mehrere Fixierelemente, zum Beispiel zwei oder drei.

Der Fixierantrieb ist zweckmäßigerweise zum Antreiben des mindestens einen Fixierelements in die Fixierstellung oder die Lösestellung oder beides ausgestaltet und vorgesehen. Mithin ist es also möglich, dass der Fixierantrieb das mindestens eine Fixierelement nur im Sinne eines Fixierens oder nur im Sinne eines Lösens des Kupplungsarms antreibt.

Das mindestens eine Fixierelement ist in der Lösestellung zweckmäßigerweise in einem Sinne von dem Lager weg und in der Fixierstellung in einem Sinne zu dem Lager hin verstellt. Mithin treibt also der Fixierantrieb das mindestens eine Fixierelement in Richtung der Lösestellung von dem Lager weg und in Richtung der Fixierstellung zu dem Lager hin. Beispielseite kann das Fixierelement direkt in eines oder mehrere Lagerelemente des Lagers formschlüssig eingreifen oder diese in einem Klemmsitz klemmen, um den Kupplungsarm in der Fixierstellung zu fixieren.

Das Lager weist zweckmäßigerweise einen Lagerbasiskörper auf, an der das Lagerelement beweglich, zum Beispiel schwenkbar, verschieblich oder beides, gelagert ist. Der Fixierantrieb umfasst zweckmäßigerweise ein in einem Innenraum des Lagerbasiskörpers angeordnetes Antriebselement, zum Beispiel einen Betätigungsbolzen, eine Betätigungskugel oder dergleichen.

Der Fixierantrieb umfasst weiterhin vorteilhaft eine zwischen dem den Kupplungsarm tragenden Lagerelement und dem Lagerbasiskörper angeordnete Kraftübertragungsanordnung mit mindestens einem Kraftübertragungselement zum Antreiben des mindestens einen Fixierelements. Somit erfolgt also die Kraftübertragung in einem Zwischenraum zwischen dem Lagerbasiskörper und dem den Kupplungsarm tragenden Lagerelement.

Das mindestens eine Kraftübertragungselement ist beispielsweise zwischen dem Lagerbasiskörper und einem an dem Lagerbasiskörper insbesondere schwenkbeweglich und/oder verschieblich gelagerten ersten Lagerelement angeordnet, welches das den Kupplungsarm tragende und ein zweites Lagerelement bildende Lagerelement lagert, beispielsweise schwenkbeweglich und/oder verschieblich. Somit befindet sich also die Kraftübertragungsmechanik beispielsweise direkt in der Nähe des Lagerbasiskörpers in einen Zwischenraum zu einem benachbarten ersten Lagerelement. Die Kraftübertragung erfolgt also quasi von einem Innenraum des Lagers nach außen, wobei die Kraft in der Nähe des Lagerbasiskörpers, insbesondere entlang desselben, nach außen gelenkt wird. Die eigentlichen Lagerkomponenten, die die Beweglichkeit des Kupplungsarms ermöglichen, befinden sich also außerhalb des Kraftübertragungsbereichs der Kraftübertragungsanordnung, z.B. radial außen.

Das mindestens eine Kraftübertragungselement ist zweckmäßigerweise ein von dem mindestens einen Fixierelement separates, beispielsweise mit diesem bewegungsgekoppeltes, Bauteil. Es ist aber auch möglich, dass das Kraftübertragungselement mit dem Fixierelement verbunden oder einstückig ist.

Das mindestens eine Kraftübertragungselement umfasst zweckmäßigerweise einen Hülsenkörper. Die Hülse kann insgesamt geschlossen ringförmig sein, aber auch im Querschnitt nur teilringförmig.

Eine bevorzugte Ausführungsform sieht vor, dass das mindestens eine Fixierelement in einen Hintergriff mit einem Abschnitt des Fahrzeughalterungsteils bringbar ist.

Das Fahrzeug-Halteteil umfasst zweckmäßigerweise ein Stützteil, beispielsweise in der Art eines Flansches, einer Platte, eines Ringes oder dergleichen. An einander entgegengesetzten Seiten einerseits des Stützteils ist das den Kupplungsarm tragende Lagerelement und andererseits das mindestens eine Fixierelement angeordnet. Mithin befindet sich also das Stützteil quasi zwischen dem mindestens einen Fixierelement und dem Lagerelement oder dem Lager insgesamt.

Das mindestens eine Fixierelement ist mit dem den Kupplungsarm tragenden Lagerelement bewegungsgekoppelt, zum Beispiel drehgekoppelt oder verschieblich verbunden, so dass das Fixierelement bei einer Bewegung des Lagerelements von diesem mitgenommen wird. Wenn sich also das Lagerelement beispielsweise dreht, dreht sich das Fixierelement mit. Wenn das Lagerelement verschoben wird, wird das Fixierelement ebenfalls verschoben.

Dennoch ist eine Relativbewegung zwischen einerseits dem Lager oder dem Lagerelement und andererseits dem mindestens einen Fixierelement möglich, d.h. der im Innern des Lagers angeordnete Fixierantrieb treibt das mindestens eine Fixierelement in die Lösestellung und/oder die Fixierstellung an.

Es ist aber auch möglich, dass das mindestens eine Fixierelement bezüglich der Fahrzeughalterung drehfest, jedoch verschieblich ist. Es ist beispielsweise möglich, dass sich das mindestens eine Lagerelement bei der Verstellung zwischen der Gebrauchsstellung und der Nichtgebrauchsstellung dreht, das Fixierelement jedoch nicht mitläuft. Die axiale Verstellung entlang beispielsweise der Schwenkachse des Lagerelements oder einer sonstigen Achse ist jedoch möglich, d.h. der Fixierantrieb treibt das Fixierelement entlang einer Schiebeachse, insbesondere der vorgenannten Schwenkachse, an.

Das mindestens eine Fixierelement ist zweckmäßigerweise in einen Halteeingriff mit dem Fahrzeughalterungsteil und/oder dem mindestens einen Lagerelement bringbar. Beispielsweise ist es möglich, dass das mindestens eine Fixierelement das Fahrzeughalterungsteil, zum Beispiel das vorgenannte Stützteil, in der Art einer Zange umgreift und so den Kupplungsarm ortsfest fixiert.

Es ist vorteilhaft vorgesehen, dass der Fixierantrieb zum Antreiben des mindestens einen Fixierelements in die Fixierstellung und in die Lösestellung vorgesehen und ausgestaltet ist.

Der Fixierantrieb wirkt zweckmäßigerweise direkt auf das mindestens eine Fixierelement in Richtung der Fixierstellung und der Lösestellung ein. Ein eventuell auf das mindestens eine Fixierelement einwirkendes Kraftübertragungselement oder Betätigungselement stellt das Fixierelement nicht nur in die Fixierstellung, sondern nimmt es auch aktiv in Richtung der Lösestellung mit.

Der Fixierantrieb wirkt also bidirektional, d.h. zum einen in die Fixierstellung, zum andern in die Lösestellung. Damit wird die Anhängekupplung sozusagen aktiv aus der Fixierstellung heraus verstellt, beispielsweise entriegelt. Die Handhabung ist deutlich vereinfacht.

Der Fixierantrieb kann außerhalb oder auch innerhalb des Lagers angeordnet sein. Bevorzugt ist es, wenn er zumindest teilweise in einem Innenraum des Lagers angeordnet ist. Z.B. befindet sich der Fixierantrieb mit einigen Antriebskomponenten in einem vom ersten und zweiten Schwenk-Lagerelement umschlossenen Raum.

Das mindestens eine Fixierelement ist zweckmäßigerweise außerhalb des Lagers angeordnet und durch den teilweise im Innenraum des Lagers angeordneten Fixierantrieb antreibbar.

Bevorzugt ist das mindestens eine Fixierelement in der Lösestellung in einem Sinne von dem Lager weg und in der Fixierstellung in einem Sinne zu dem Lager hin verstellt.

Das mindestens eine Fixierelement greift zum Beispiel in der Fixierstellung in das den Kupplungsarm tragende zweite Lagerelement ein und/oder hält dieses in einem Klemmsitz dort ortsfest bezüglich der Fahrzeughalterung.

Der Fixierantrieb umfasst zweckmäßigerweise eine zwischen dem den Kupplungsarm tragenden zweiten Lagerelement und dem Lagerbasiskörper angeordnete Kraftübertragungsanordnung mit mindestens einem Kraftübertragungselement zum Antreiben des mindestens einen Fixierelements. Die Kraftübertragung erfolgt zweckmäßigerweise bidirektional, d.h. dass das Kraftübertragungselement vom Fixierantrieb sowohl in Richtung der Lösestellung als auch in Richtung der Fixierstellung angetrieben wird und das Kraftübertragungselement das mindestens eine Fixierelement mitnimmt, so dass es den Kupplungsarm freigibt oder fixiert.

Das mindestens eine Kraftübertragungselement ist zweckmäßigerweise zwischen dem Lagerbasiskörper und dem ersten Lagerelement angeordnet. Beispielsweise umfasst das mindestens eine Kraftübertragungselement einen Hülsenkörper oder einen sich nur über einen Teilring oder Teilkreis erstreckenden Hülsenkörper, d.h. einen Hülsenkörper mit einer seitlichen Öffnung oder einem Schlitz.

Das Fahrzeug-Halteteil umfasst zweckmäßigerweise ein Stützteil, beispielsweise in der Art eines Flansches oder eine Platte oder eines Ringes. An einander entgegengesetzten Seiten des Stützteils befindet sich einerseits das den Kupplungsarm tragende zweite Lagerelement und andererseits das mindestens eine Fixierelement. Mithin greifen also das Fixierelement und das zweite Schwenk-Lagerelement quasi von einander entgegengesetzten Seiten an dem Stützteil an.

Es ist vorteilhaft, wenn das mindestens eine Fixierelement in eine Klemmstellung oder Fixierstellung bringbar ist, bei der es das Stützteil und/oder das zweite Schwenk-Lagerelement formschlüssig hält und/oder klemmt.

Das erste Schwenk-Lagerelement ist zweckmäßigerweise an dem Lagerbasiskörper, der vorzugsweise eine Welle oder einen Rohrkörper umfasst, um die erste Schwenkachse schwenkbar gelagert. Das erste und das mindestens eine zweite Schwenk-Lagerelement sind zur Bildung eines Kardangelenks z.B. anhand mindestens eines Achselements miteinander drehbeweglich gekoppelt. Es ist aber auch möglich, dass das zweite Schwenk-Lagerelement an dem ersten Schwenk-Lagerelement über sphärische Flächen zur Bildung eines Taumellagers oder eines kugelgelenkig lagernden Lagers aneinander gelagert sind.

Vorteilhaft ist vorgesehen, dass die Fixiereinrichtung eine Zangenhalterung umfasst, die einen ersten, von dem mindestens einen Fixierelement gebildeten Zangenschenkel und einen zweiten Zangenschenkel aufweist, die in der Fixierstellung aufeinander zu bewegt sind und das den Kupplungsarm tragende Lagerelement an der fahrzeugfesten Fahrzeughalterung fixieren.

Es ist dabei ein Grundgedanke, dass eine Art Zange oder Klammer gebildet wird, so dass das zu haltende und zu fixierende Bauteil sich beispielsweise selbst an der fahrzeugfesten Fahrzeughalterung in der Art einer Zange fixiert oder von einer an der fahrzeugfesten Fahrzeughalterung angeordneten Zangenhalterung sozusagen in die Zange genommen wird, um die Fixierung des Kupplungsarms in der Gebrauchsstellung oder der Nichtgebrauchsstellung oder beidem zu erzielen.

Das Konzept ist beispielsweise bei einem nur um eine Achse schwenkenden Lager, aber auch bei einem den Kupplungsarm mehrachsig schwenkbar lagernden Lager ohne weiteres realisierbar. Weiterhin ist ein zangenartiger oder klammerartiger Halteeingriff auch bei einem Schiebelager oder einem kombinierten Schwenk- Schiebelager realisierbar.

Es ist möglich, dass nur der erste Zangenschenkel zur Verstellung zwischen der Fixierstellung und der Lösestellung der Fixiereinrichtung beweglich ist, während der zweite Zangenschenkel bei dieser Vorstellung relativ ortsfest bleibt. Beispielsweise kann der erste Zangenschenkel zum zweiten Zangenschenkel entlang einer gekrümmten Bahn, einer linearen Achse oder dergleichen verstellt werden. Es ist auch möglich, dass beide Zangenschenkel bei der Verstellung zwischen der Lösestellung und der Fixierstellung betätigt werden, d.h. dass sich beide Zangenschenkel aufeinander zu oder voneinander weg bewegen.

Weiterhin ist es selbstverständlich möglich, dass mehr als zwei Zangenschenkel vorhanden sind, d.h. dass beispielsweise zwei Zangenschenkel mit einem einzigen anderen Zangenschenkel zusammenwirken oder dass zwei oder weitere Paare von Zangenschenkeln, die in der Fixierstellung aufeinander zu bewegt sind und in der Lösestellung voneinander Weg bewegt sind, vorgesehen sind.

Die beiden Zangenschenkel nehmen in der Fixierstellung eine Klemmstellung ein, bei der sie das den Kupplungsarm tragende Lagerelement bezüglich der fahrzeugfesten Fahrzeughalterung verklemmen. Man könnte die Zangenschenkel im Falle eines Klemmens auch als Klemmschenkel bezeichnen.

Es ist aber auch möglich, dass nur ein Formschluss durch die Zange hergestellt wird, d.h. dass die Zangenschenkel eine Formschluss-Fixierstellung einnehmen, bei der mindestens ein Zangenschenkel formschlüssig mit der Fahrzeughalterung in Eingriff ist.

Das den Kupplungsarm tragende Lagerelement bildet dabei zweckmäßigerweise einen Zangenschenkel. Es versteht sich, dass jedoch auch abseits des Lagerelements zwei Zangenschenkel vorgesehen sein können, die in die Fixierstellung und/oder die Lösestellung beweglich sind. Das Lagerelement muss also keinen Zangenschenkel bilden.

Eine vorteilhafte Variante sieht vor, dass das den Kupplungsarm tragende Lagerelement ausschließlich schwenkbeweglich bezüglich der Fahrzeughalterung ist, beispielsweise um eine erste Schwenkachse und/oder mehrachsig, das heißt um eine erste Schwenkachse und mindestens eine zweite Schwenkachse. Axial hingegen oder linear ist das mindestens eine Lagerelement, das den Kupplungsarm trägt, jedoch fest. Der Zangenschenkel, der von dem mindestens einen Fixierelement gebildet wird, wird bei dieser Ausführungsform zweckmäßigerweise axial, zum Beispiel entlang oder parallel zu einer oder der Schwenkachsen des Lagerelements, zwischen der Fixierstellung und der Lösestellung bewegt.

Diese Ausführungsform sieht vorteilhaft vor, dass sich das Lager quasi selbst am fahrzeugfesten Bauteil, der Fahrzeughalterung oder dem Fahrzeughalterungsteil, verklammert oder formschlüssig festlegt oder beides.

Das Fahrzeug-Halteteil umfasst beispielsweise ein Stützteil in der Art eines Flansches oder einer Platte, das zwischen den beiden Zangenschenkeln angeordnet ist. Mindestens einer der Zangenschenkel weist zweckmäßigerweise eine Formschlusskontur zum Eingriff mit einer Gegen-Formschlusskontur der Fahrzeughalterung in der Fixierstellung auf. Es ist auch möglich, dass die Zangenschenkel das Stützteil sozusagen in die Zange nehmen, d.h. sich an diesem verklemmen. Selbstverständlich ist beides möglich, zum einen eine Verklemmung, zum andern auch ein formschlüssiger Eingriff.

Das vorgenannte Stützteil kann beispielsweise ringförmig oder teilringförmig sein. Es ist aber auch möglich, dass einer oder beide der Zangenschenkel ringförmig oder teilringförmig sind.

Es ist auch möglich, dass ein Zangenschenkel eine Hülse umfasst, die in der Fixierstellung in eine Aufnahme an einem Ring, der den anderen Zangenschenkel bildet, eingreift. Dazwischen kann ein weiterer Ring oder Teilring vorgesehen sein, nämlich beispielsweise das vorgenannte fahrzeugfeste Stützteil.

Das mindestens eine Fixierelement ist zweckmäßigerweise durch den Fixierantrieb in einen Fixiereingriff oder außer einen Fixiereingriff mit dem den Kupplungsarm tragenden Lagerelement oder einem mit dem Lagerelement bewegungsgekoppelten Bauteil bringbar. Dieses letztgenannte Bauteil ist beispielsweise über ein Getriebe mit dem Lagerelement verbunden, d.h. wenn dieses Bauteil fixiert wird, stützt sich das Lagerelement über das Getriebe bewegungsfest an dem mindestens einen Fixierelement ab.

Das mindestens eine, einen Zangenschenkel bildende Fixierelement ist zweckmäßigerweise mit dem den Kupplungsarm tragenden Lagerelement um eine erste Schwenkachse drehfest verbunden und zur Verstellung zwischen der Lösestellung und der Fixierstellung relativ zu diesem Lagerelement linear verschieblich, insbesondere entlang der ersten Schwenkachse oder auch um eine zweite Schwenkachse verdrehbar.

Vorteilhaft ist vorgesehen, dass das erste Schwenk-Lagerelement in einem Innenraum des zweiten Schwenk-Lagerelements angeordnet ist und von einem Schwenkantrieb zum Verstellen des Kupplungsarms zwischen der Gebrauchsstellung und der Nichtgebrauchsstellung angetrieben wird.

Es ist ein Grundgedanke dabei, dass die Schwenk-Lagerelemente sozusagen ineinander angeordnet sind, so dass das Lager sehr kompakt ist. Ein zusätzlicher Schwenkantrieb, zum Beispiel ein motorischer oder manueller Schwenkantrieb, erleichtert die Bedienung, indem durch den Schwenkantrieb der Kupplungsarm zwischen der Gebrauchsstellung und der Nichtgebrauchsstellung angetrieben wird.

Der Schwenkantrieb kann innerhalb des Lagers angeordnet sein, so dass er quasi von innen her das innere, erste Schwenk-Lagerelement antreibt. Es ist aber auch möglich, dass der Schwenkantrieb außerhalb des Lagers angeordnet ist, so dass er von außen her auf die anzutreibenden Komponenten einwirkt. Dadurch ist eine sehr günstige Nachrüstung beispielsweise einer an sich manuell zu betreibenden Anhängekupplung möglich.

Zweckmäßigerweise ist vorgesehen, dass das erste, durch den Schwenkantrieb zum Beispiel anhand des Mitnehmers angetriebene Schwenk-Lagerelement das zweite Schwenk-Lagerelement mitnimmt. Es ist auch möglich, dass ein Mitnehmer, der mit dem Schwenkantrieb verbunden ist, das zweite Schwenk-Lagerelement antreibt.

Zweckmäßigerweise ist eine Führungsanordnung zur Bewegungssteuerung und Führung der Schwenkbewegung des zweiten Schwenk-Lagerelements um die zweite Schwenkachse vorhanden. Das zweite Schwenk-Lagerelement wird also quasi direkt oder indirekt vom Schwenkantrieb um die erste Schwenkachse angetrieben, ist jedoch bezüglich der zweiten Schwenkachse beweglich, wobei die Führungsanordnung dafür sorgt, dass diese Schwenkbewegung um die zweite Schwenkachse gesteuert und/oder geführt abläuft. Der Kupplungsarm schwenkt also beispielsweise um die erste Schwenkachse in der Art einer Haupt-Schwenkachse und schwenkt überlagert um die zweite Schwenkachse, hat also insgesamt zwei Schwenkbewegungen, wobei die Führungsanordnung für die Steuerung und Koordination dieser weiteren Schwenkbewegung sorgt.

Bevorzugt ist die Führungsanordnung an einem von der Fahrzeughalterung entfernten Bereich vorgesehen, beispielsweise an einem Kopf eines Lagerbasiskörpers. Mithin ist es zweckmäßig, wenn das zweite Schwenk-Lagerelement zwischen der Führungsanordnung und der Fahrzeughalterung, jedenfalls deren Fahrzeughalterungsteil, angeordnet ist. Es ist auch möglich, dass die Führungsanordnung zwischen beispielsweise einem Kopfbereich des Lagerbasiskörpers und der Fahrzeughalterung angeordnet ist oder dort angeordnete Komponenten umfasst.

Bevorzugt ist ein Mitnehmer vorgesehen, der mit dem ersten Schwenk-Lagerelement drehfest verbunden ist und das zweite, also das äußere, Schwenk-Lagerelement durchsetzt und in einem Antriebseingriff mit dem Schwenkantrieb steht. Der Schwenkantrieb wirkt also quasi durch das zweite Schwenk-Lagerelement hindurch auf das erste Schwenk-Lagerelement und treibt dieses an.

Dabei ist es möglich, dass die Öffnung am zweiten Schwenk-Lagerelement, die von dem Mitnehmer durchsetzt ist, so groß ist, dass der Mitnehmer in der Öffnung ein Spiel hat, die Öffnung also mit einem Bewegungsspiel durchdringt und ausschließlich das erste Schwenk-Lagerelement direkt antreibt. Der Schwenkantrieb kann bei dieser Ausführungsform auch in nicht direkt das zweite Schwenk-Lagerelement treibender Verbindung mit diesem zweiten Schwenk-Lagerelement sein. Das zweite Schwenk-Lagerelement könnte z.B. durch einen weiteren Schwenkantrieb angetrieben werden. Zweckmäßig ist es, wenn das erste Schwenk-Lagerelement das zweite Schwenk-Lagerelement mitnimmt. Der Schwenkantrieb treibt also das erste Schwenk-Lagerelement an, welches seinerseits wiederum das zweite Schwenk-Lagerelement mitnimmt.

Bevorzugt ist es, wenn der Mitnehmer koaxial mit der zweiten Schwenkachse, also der zweiten Kardanachse, ist.

Der Mitnehmer kann beispielsweise eine Art Bolzenvorsprung umfassen, der vor das erste Schwenk-Lagerelement vorsteht. Der Bolzenvorsprung kann fest, insbesondere drehfest, mit dem ersten Schwenk-Lagerelement verbunden sein. Es ist aber auch möglich, dass der Bolzenvorsprung bezüglich der zweiten Schwenkachse schwenkbar und/oder verschieblich ist.

Eine besonders bevorzugte Ausführungsform der Erfindung sieht vor, dass der Mitnehmer von einem Achselement zur schwenkbaren Lagerung des zweiten Schwenk-Lagerelements an dem ersten Schwenk-Lagerelement gebildet ist. Die Lagerachse bildet also beispielsweise gleichzeitig den Mitnehmer. Das Achselement kann bezüglich des ersten oder des zweiten Schwenk-Lagerelements drehbar oder drehfest sein.

Der Mitnehmer ist bezüglich der ersten Schwenkachse mit dem zweiten Schwenk-Lagerelement vorzugsweise drehfest verbunden. Es ist auch möglich, dass der Mitnehmer bezüglich der zweiten Schwenkachse mit dem zweiten Schwenk-Lagerelement drehfest verbunden ist.

Zweckmäßigerweise ist der Mitnehmer mit einer Antriebskomponente des Schwenkantriebs, beispielsweise dem nachfolgend noch beschriebenen Antriebskörper, allenfalls mit Drehspiel um die zweite Schwenkachse verbunden, wobei dies nicht notwendig ist.

Der Schwenkantrieb umfasst zweckmäßigerweise einen sich ringförmig um das Lager erstreckenden Antriebskörper, der in Drehmitnahmeverbindung mit dem ersten Schwenk-Lagerelement ist und bezüglich der ersten Schwenkachse vom Schwenkantrieb angetrieben wird. Mithin dreht sich also der Antriebskörper, beispielsweise ein vollständiger Ring oder auch ein Teilringkörper um die erste Achse und nimmt dabei das erste Schwenk-Lagerelement mit.

Nachfolgend werden Ausführungsbeispiele der Erfindung anhand der Zeichnung erläutert. In den Ansichten sind teilweise unterschiedliche Varianten der Anhängekupplung dargestellt, wobei zur Vereinfachung darauf verzichtet wird, von jeder Variante eine Außenansicht darzustellen.

Es zeigen:
- Figur 1: eine frontale Ansicht auf ein erstes Ausführungsbeispiel einer erfindungsgemäßen Anhängekupplung in einer Gebrauchsstellung, die in
- Figur 2: in einer Ruhestellung oder Nichtgebrauchsstellung dargestellt ist,
- Figur 3: eine Seitenansicht auf die Anhängekupplung gemäß Figur 1,
- Figur 4: eine Seitenansicht auf die Anhängekupplung gemäß Figur 1 in einer Zwischenstellung,
- Figur 5: die Anhängekupplung gemäß vorstehender Figuren in einer perspektivischen Ansicht von schräg oben, jedoch mit einem motorischen Fixierantrieb einer Fixiereinrichtung in einer ersten Ausführungsform,
- Figur 6: die Anhängekupplung gemäß Figur 4, jedoch mit einem Schwenkantrieb und einem Fixierantrieb in einer zweiten Ausführungsform,
- Figur 7: eine Explosionsdarstellung der Anhängekupplung gemäß Figur 6,
- Figur 8: eine Schnittdarstellung der Anhängekupplung gemäß Figur 6 entlang etwa einer Schnittlinie B-B in Figur 6 in einer Verriegelungsstellung,
- Figur 9: eine Schnittdarstellung der Anhängekupplung gemäß Figur 6-8, etwa einer Schnittlinie A-A in Figur 1,
- Figur 10: einen Querschnitt durch die Anhängekupplung gemäß Figur 3 etwa entlang einer Schnittlinie C-C, wobei die Anhängekupplung verriegelt ist,
- Figur 11: die Anhängekupplung gemäß Figur 10, jedoch im entriegelten Zustand,
- Figur 12: ein Detail D aus Figur 1, das eine Sicherungseinrichtung in einer sichernden Stellung zeigt,
- Figur 13: einen Querschnitt durch die bereits entriegelte Anhängekupplung gemäß Figur 1, etwa entlang einer Schnittlinie E-E,
- Figur 14: einen Querschnitt durch die Anhängekupplung gemäß Figur 1, jedoch mit dem Kupplungsarm in einer Zwischenstellung und etwa entsprechend einer Schnittlinie F-F in Figur 4,
- Figur 15: einen Schnitt durch die in der Stellung gemäß Figur 4 befindliche Anhängekupplung, jedoch entlang einer Schnittlinie G-G in Figur 2,
- Figur 16: einen Schnitt durch die verriegelte Anhängekupplung gemäß Figur 2 entlang einer Schnittlinie G-G in Figur 2,
- Figur 17: die Anhängekupplung gemäß Figur 6 perspektivisch von oben in einem Teilschnitt,
- Figur 18: einen Antriebsring der Anhängekupplung gemäß Figur 17 von schräg vorn,
- Figur 19: den Antriebsring der Anhängekupplung gemäß Figur 17 von schräg hinten,
- Figur 20a-c: einen Bewegungsablauf der Anhängekupplung gemäß Figur 17 in einer Schnittdarstellung entlang einer Schnittlinie H-H in Figur 6,
- Figur 21: einen perspektivischen Teilschnitt durch die Anhängekupplung gemäß Figur 1 zur Veranschaulichung einer Führungsanordnung,
- Figur 22: einen Kopf des Kupplungsarms der Anhängekupplung gemäß Figur 21,
- Figur 23: eine Seitenansicht auf die Führungsanordnung gemäß Figur 21,
- Figur 24: eine einen Führungskörper mit einer Führungskulissenfläche der Führungsanordnung von der Seite und
- Figuren 25: und 26 perspektivische Schrägansichten des Führungskörpers gemäß Figur 24,
- Figur 27: eine Querschnittsansicht durch die Anhängekupplung gemäß Figur 5, mit einer alternativen Führungsanordnung, etwa entsprechend einer Schnittlinie I-I in Figur 5,
- Figur 28: eine Variante der vorstehenden Anhängekupplungen mit einer Verriegelungskugeln umfassenden Verriegelung in eine Querschnittsansicht etwa entsprechend der Schnittlinie A-A in Figur 5 in einer Verriegelungsstellung,
- Figur 29: die Anhängekupplung gemäß Figur 28 in Entriegelungsstellung,
- Figur 30: eine Variante der vorstehenden Anhängekupplungen mit einer einen Verriegelungshebel umfassenden Verriegelung, etwa in der Schnittdarstellung entsprechend Figur 28 in einer Verriegelungsstellung,
- Figur 31: die Anhängekupplung gemäß Figur 30, jedoch in Entriegelungsstellung,
- Figur 32: eine Anhängekupplung als Variante der Anhängekupplung gemäß Figuren 28 und 29 mit einem motorischen Antrieb, der direkt auf einen Verriegelungskugeln betätigenden Verriegelungsbolzen wirkt,
- Figur 33: eine weitere Anhängekupplung als Variante der in Figur 32 dargestellten Anhängekupplung mit einem Antrieb, der über eine Feder auf einen Verriegelungsbolzen einwirkt,
- Figur 34: eine perspektivische Schrägansicht einer weiteren Anhängekupplung mit einem eine Verklemmung vorsehenden Verriegelungskonzept,
- Figur 35: eine Schnittdarstellung der Anhängekupplung gemäß Figur 34 etwa entlang einer Schnittlinie J-J in Figur 34,
- Figur 36: eine Schnittdarstellung durch die Anhängekupplung der Anhängekupplung gemäß Figur 34 etwa entlang einer Schnittlinie K-K in Figur 34,
- Figur 37: eine verriegelte Anordnung von Komponenten der vorstehenden Anhängekupplungen,
- Figur 38: ein Lagerelement der Anordnung gemäß Figur 37 zur Verriegelung mit einem in
- Figur 39: dargestellten fahrzeugseitigen Flanschelement und einem in
- Figur 40: dargestellten Klemmring der Anordnung gemäß Figur 37,
- Figur 41: eine Schnittdarstellung eines Details der verriegelten Anordnung gemäß Figur 37, etwa entsprechend einer Schnittlinie L-L in Figur 39,
- Figur 42: ein Detail des Flanschelements gemäß Figur 39 etwa entsprechend der Schnittlinie L-L,
- Figur 43: eine weitere Anhängekupplung von frontal vorn, die in
- Figur 44: in einer Schnittdarstellung entlang einer Schnittlinie M-M in Figur 43 in einem verriegelten Zustand und in
- Figur 45: in einem entriegelten Zustand dargestellt ist.

In der Zeichnung sind Anhängekupplungen 10, 410, 210 dargestellt, die teilweise gleiche Komponenten aufweisen, die mit denselben Bezugsziffern versehen sind, teilweise auch unterschiedliche Komponenten, die dementsprechend mit in der Regel um 100 verschiedene Bezugsziffern versehen sind.

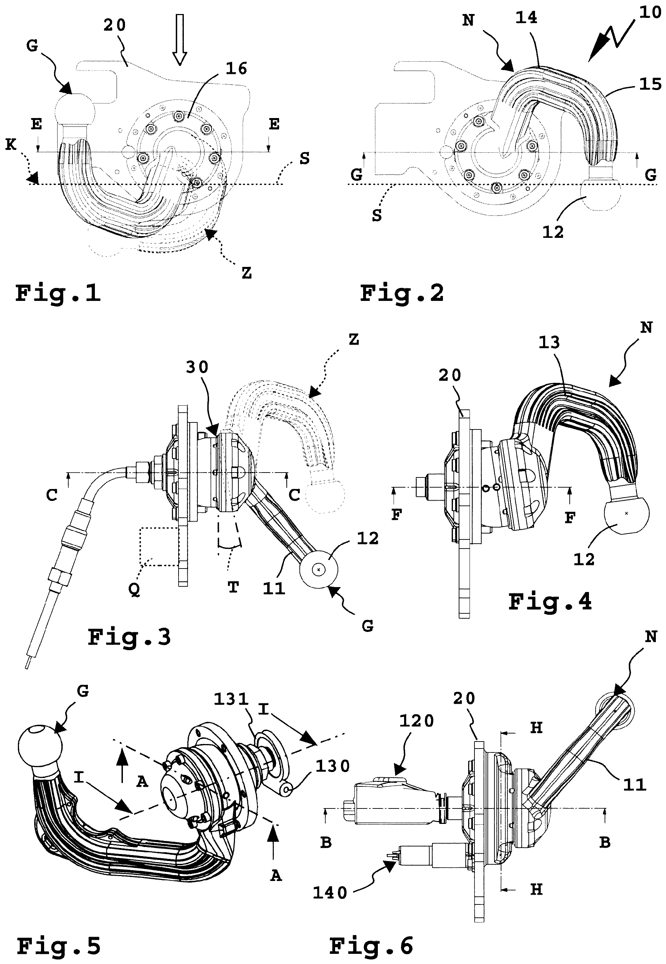

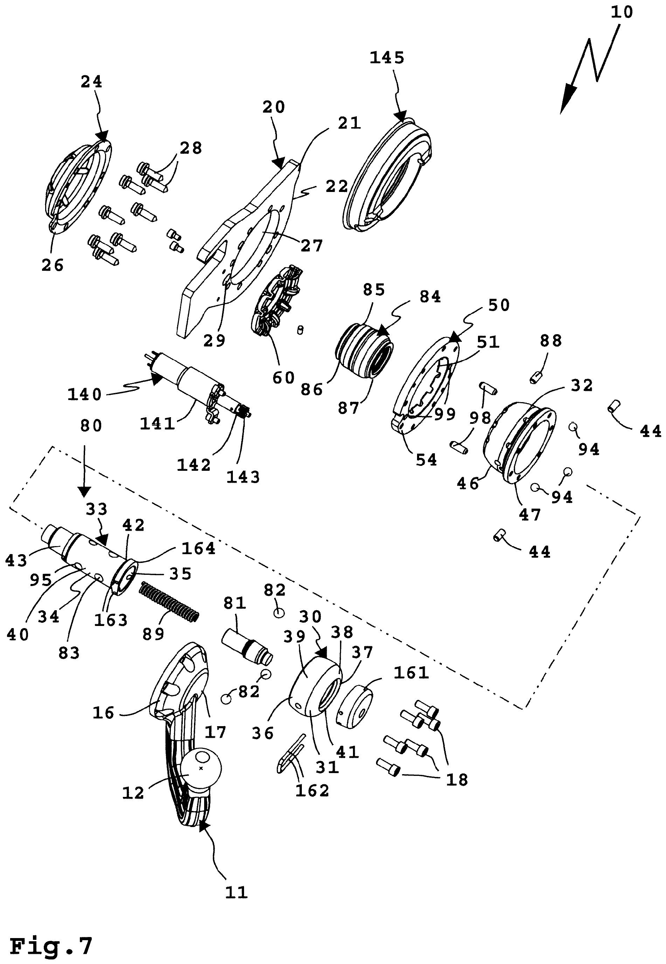

Die in den Figuren 1-28 dargestellte Anhängekupplung 10 umfasst verschiedene Varianten, insbesondere unterschiedliche Varianten bezüglich des Antriebskonzeptes und des Fixierkonzepts, insbesondere auch des Fixierantriebs. Die Anhängekupplungen weisen jedoch ähnliche Grundkonzepte auf, so dass in der Regel dieselben Bezugsziffern aus dem Nummernkreis 1-100 verwendet werden.

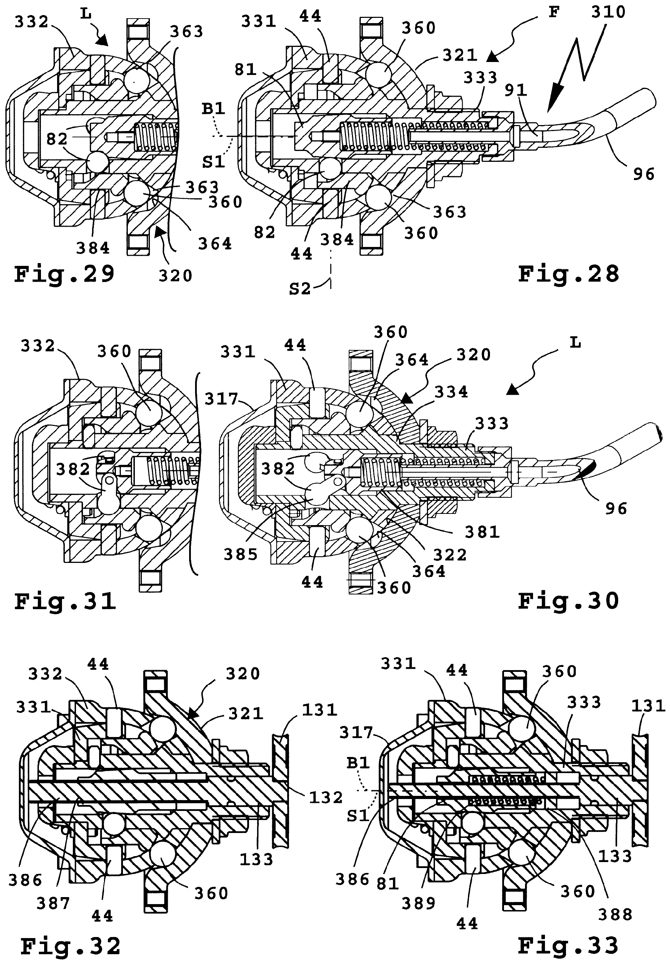

Anhand der Figuren 29-33 werden alternative Antriebskonzepte einer Anhängekupplung 310, die kinematisch eine Variante der Anhängekupplung 10 darstellt, sowie einen alternatives Verriegelungskonzept erläutert.

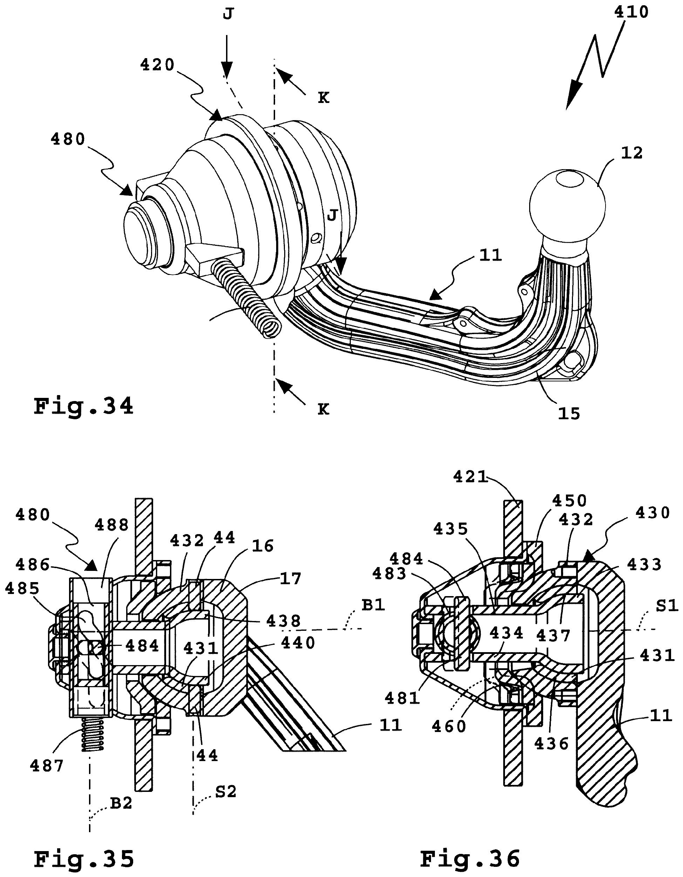

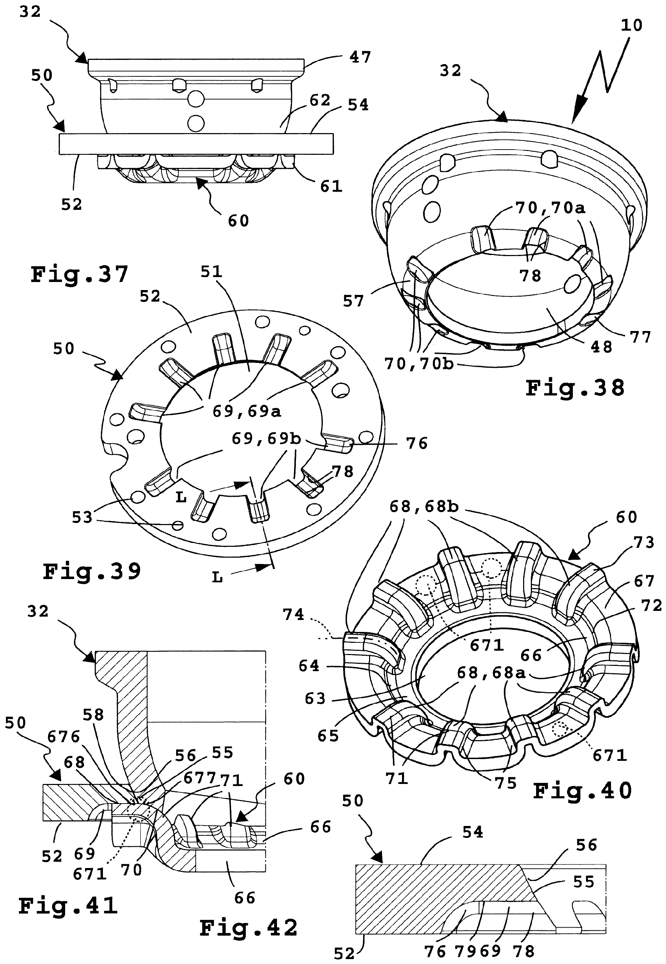

Die in den Figuren 34-36 dargestellte Anhängekupplung 410 hat ein Verriegelungskonzept wie die Anhängekupplung 10, was den formschlüssigen Halt an der fahrzeugseitigen Fahrzeughalterungsteil angeht, das anhand der Figuren 37-42 noch deutlicher wird.

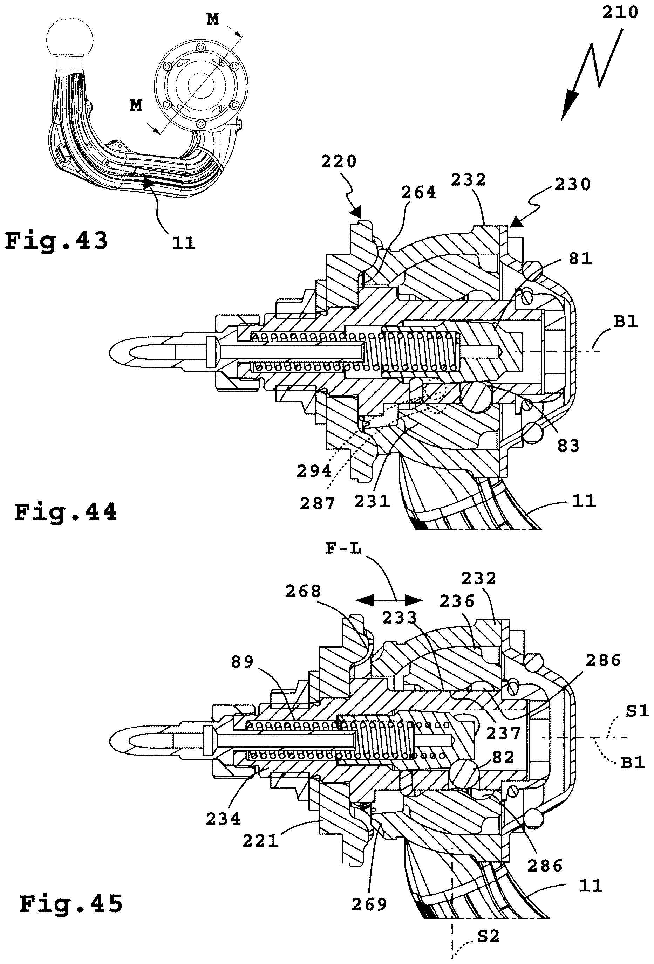

Die Anhängekupplung 210 gemäß Figuren 43-45 dient zur Verdeutlichung eines alternativen Lagerkonzeptes, das sowohl eine erste Schwenkachse als auch eine nicht ortsfeste zweite Schwenkachse umfasst, und zudem auch dazu, ein etwas modifiziertes Verriegelungskonzept zu erläutern.

Die Anhängekupplungen 10, 410 und 210 zeigen unterschiedliche Varianten von kinematischen Konzepten, die zur Realisierung einer zumindest zweiachsigen Schwenkbarkeit des jeweiligen Kupplungsarms geeignet sind und zudem auch optimierte Verriegelungskonzepte. Aus den nachfolgenden Erläuterungen wird auch klar, dass die beim der einen Anhängekupplung realisierten Konzepte auch bei der jeweils anderen Ausführungsform einer Anhängekupplung anwendbar ist.

Die am Heck eines Kraftfahrzeugs K befestigbaren oder befestigten Anhängekupplungen 10, 410, 210 haben jeweils einen Kupplungsarm 11, der an seinem freien Ende ein zum Anhängen eines Anhängers, z.B. einer Zugkugelkupplung, eines Anhängers geeignetes Kuppelstück 12, z.B. eine Kupplungskugel, umfasst. Das Kraftfahrzeug K ist beispielsweise ein Personenkraftwagen, insbesondere mit einem Verbrennungsmotor und/oder einem Elektromotor. An das Kuppelstück 12 könnte auch ein Lastenträger angekuppelt werden. Weiterhin ist es möglich, anstelle des Kuppelstücks 12 beispielsweise einen Steckvorsprung oder eine Steckaufnahme zur Steck-Montage eines am Heck des Kraftfahrzeugs K montierbaren Lastenträgers (nicht dargestellt) vorgesehen sein.

Der Kupplungsarm 11 ist zwischen einer beispielsweise in den Figuren 1, 3, 5 dargestellten Gebrauchsstellung G und einer in den Figuren 2, 4 und 6 dargestellten Nichtgebrauchsstellung N anhand eines Lagers 30, 430, 230 beweglich an einer Fahrzeughalterung 20, 420, 220 gelagert. In der Gebrauchsstellung G steht das Kuppelstück 12 frei nach hinten vor einen Stoßfänger S eines Kraftfahrzeugs K nach hinten vor, während das Kuppelstück 12 in der Nichtgebrauchsstellung N näher zum Kraftfahrzeug K hin und insbesondere hinter den Stoßfänger S zurück verstellt ist, beispielsweise zwischen dem Stoßfänger S und einem in der Zeichnung nicht sichtbaren Heck einer Karosserie des Kraftfahrzeugs K gegen Sicht von schräg hinten oben oder auch direkt von hinten auf das Kraftfahrzeug K verborgen ist. In gestrichelten Linien ist beispielhaft eine mögliche Zwischenstellung Z des Kupplungsarms 11 eingezeichnet.

Der Kupplungsarm 11 umfasst einen Armabschnitt 13 mit einer ersten Krümmung 14 und einer zweiten Krümmung 15 und steht von einem Haltekopf 16 ab. Der Haltekopf 16 umfasst beispielsweise einen Deckel 17. Der Haltekopf 16 ist mit Schrauben 18 oder sonstigen Befestigungselementen am Lager 30 befestigt.

Das Lager 30, 430, 230 umfasst ein erstes Lagerelement 31, 431, 231 und ein zweites Lagerelement 32, 432, 232 an welchem seinerseits wiederum der Kupplungsarm 11 befestigt ist. Der Haltekopf 16 ist an dem Lagerelement 32, 432 angeordnet.

Bei der Anhängekupplung 210 hingegen ist der Kupplungsarm 11 mit dem Lagerelement 232 einstückig. Der Kupplungsarm 11 steht vom Lagerelement 232 seitlich ab.

Das erste Lagerelement 31, 431, 231 ist an einem Lagerbasiskörper 33, 433, 233 um eine erste Schwenkachse S1 schwenkbar gelagert bzw. bei der Anhängekupplung 210 um die Schwenkachse S1 schwenkbar und entlang derer auch axial verschieblich gelagert. Bei den Anhängekupplungen 10, 410 ist das Lagerelement 31, 431 jedoch bezüglich der Schwenkachse S1 unverschieblich.

Das zweite Lagerelement 32, 432, 232 ist am ersten Lagerelement 31, 431, 231 um eine zweite Schwenkachse S2 schwenkbar gelagert. Die Schwenkachsen S1 und S2 sind beispielsweise rechtwinkelig zueinander, so dass ein Kardangelenk oder ein kardanisches Lager gebildet ist. Es ist auch möglich, dass die Schwenkachsen in anderen als einem rechten Winkel zueinander stehen.

Bei der Anhängekupplung 210 ist die zweite Schwenkachse S2 nicht ortsfest bezüglich der ersten Schwenkachse S1, so dass man auch von einer Taumellagerung sprechen kann bzw. das Lager 230, zumindest was das Lagerkonzept zwischen den Lagerelementen 231, 232 angeht, ein Taumellager bildet.

Die Fahrzeughalterung 20, 420, 220 umfasst beispielsweise ein Fahrzeughalterungsteil 21, 421, 221, z.B. eine Montageplatte, das fest mit dem Kraftfahrzeug K verbindbar ist, beispielsweise an einem Querträger Q, der sich quer zur Fahrtrichtung am Heck des Kraftfahrzeugs K erstreckt, befestigbar, zum Beispiel mit Schrauben, anhand einer Schweißverbindung oder dergleichen. Das Fahrzeughalterungsteil 21 besteht beispielsweise aus Metallblech. Es kommt allerdings darauf nicht an, d.h. es sind auch anders ausgestaltete Fahrzeughalterungsteile oder sonstige strukturfest am Kraftfahrzeug K befestigbare, beispielsweise eine Rippen- oder Gitterstruktur umfassende, Fahrzeughalterungsteile möglich.

An der Fahrzeughalterung 20, 420, 220 ist ein Lagerbasiskörper 33, 433, 233 ortsfest angeordnet.

Der Lagerbasiskörper 33, 433, 233 könnte beispielsweise einen massiven Zapfen oder Lagervorsprung, der vor eine Vorderseite 22 des Fahrzeughalterungsteils 21 vorsteht, umfassen. Prinzipiell wäre es möglich, dass ein derartiger Lagervorsprung oder Zapfen einen festen Bestandteil der Fahrzeughalterung 20 bildet, beispielsweise mit dem Fahrzeughalterungsteil 21 einstückig ist. Es ist ferner möglich, dass beispielsweise eine Vertiefung oder Lageraufnahme vorgesehen ist, in die ein entsprechender Lagervorsprung des ersten Lagerelements eingreift.

Bei den Ausführungsbeispielen handelt es sich bei dem Lagerbasiskörper 33, 433, 233 um eine Hohlwelle 34, 434, 234, in deren Innenraum 35 Platz für weitere Komponenten der Anhängekupplung ist, beispielsweise für Komponenten einer Fixiereinrichtung oder eines Fixierantriebs, was später noch erläutert wird.

Das Lagerelement 31, 431, 231 umfasst beispielsweise einen Hülsenkörper 36, 436, 236, der sich radial innen am Lagerbasiskörper 33, 433, 233 mit einer Lagerfläche 37, 437, 237 abstützt.

Die Lagerfläche 37 des Hülsenkörpers 36 umfasst einen an einem kragenartig nach radial innen vorstehenden Stützabschnitt 38 vorgesehenen Lagerabschnitt 37a und einen weiteren Lagerabschnitt 37b an einem Innenumfang eines Hülsenabschnitts 39 des Hülsenkörpers 36.

Der Lagerabschnitt 37a stützt sich am Außenumfang 40 des Lagerbasiskörpers 33 ab und ist dort drehbar gelagert. Der Außenumfang 40 bildet also eine Drehlagerfläche. Der Lagerabschnitt 37a umfasst beispielsweise eine stirnseitige Stützkontur 41, die sich an einer Widerlager-Stützkontur 42 am Außenumfang 40 des Lagerbasiskörpers 33 in Richtung der Schwenkachse S1 abstützt. Somit ist jedenfalls das Lagerelement 31 in Richtung der Schwenkachse S1 in einem Sinne von der Fahrzeughalterung 20 oder dem Fahrzeughalterungsteil 21 weg abgestützt.

Im Bereich des Hülsenabschnitts 39 befinden sich Aufnahmen, in denen Achselemente 44 drehfest oder drehbar aufgenommen sind. Die Achselemente 44 stehen nach radial außen vor das Lagerelement 31 vor und sind in Eingriff mit Aufnahmen am äußeren Lagerelement 32.

Die Achselemente 44, beispielsweise Achsstifte oder Lagerstifte, können in den Aufnahmen des Lagerelements 31 und/oder den Aufnahmen des Lagerelements 32 drehbar aufgenommen sein, so dass diese Lageraufnahmen bilden. Es ist aber auch möglich, dass die Achselemente 44 in einer der Aufnahmen des Lagerelements 31 oder 32 drehfest aufgenommen sind.

Die Achselemente 44 verlaufen mit ihrer Längserstreckungsrichtung entlang der Schwenkachse S2, d.h. sie definieren eine kardanische Achse. Die Achselemente 44 sind einander gegenüberliegend am Lagerelement 31 vorgesehen. Das Lagerelement 32 schwenkt also anhand der Achselemente 44 um die Schwenkachse S2 relativ zum Lagerelement 31, so dass ein Kardangelenk gebildet ist. Eine Auslenkung des Lagerelements 32 und mithin des daran fest angeordneten Kupplungsarms 11 in beispielsweise der Zwischenstellung Z um die zweite Schwenkachse S2 um einen Winkel T ist in Figur 3 angedeutet.

Das Lagerelement 32 weist einen Hülsenkörper 46 auf, an dessen Frontseite oder Stirnseite ein Montageflansch 47 vorgesehen ist. Das Lagerelement 32 verjüngt sich zu seinem dem Montageflansch 47 entgegengesetzten Längsendbereich nach schräg innen, d.h. zur Durchtrittsöffnung 48 hin. Der Hülsenkörper 46 ist z.B. in der Art eines sozusagen bodenseitig offenen Topfes ausgestaltet.

Der Montageflansch 47 dient zur Befestigung des Haltekopfes 16, d.h. die Schrauben 18 können in den Montageflansch 47 von der Stirnseite her eingeschraubt werden. Somit deckt der Haltekopf 16 sozusagen das Lagerelement 32 stirnseitig ab, bildet also einen Deckel 17. An der dem Montageflansch 47 entgegengesetzten Seite weist das Lagerelement 32 eine Durchtrittsöffnung 48 auf, durch die der Lagerbasiskörper 33 in den Innenraum des Lagerelements 32 hinein vorsteht. Die Durchtrittsöffnung 48 ist derart weit bemessen, dass das zweite Lagerelement 32 nicht nur um die erste Schwenkachse S1, sondern auch, soweit dies die Bewegung zwischen der Gebrauchsstellung G und der Nichtgebrauchsstellung N erfordert, um die Schwenkachse S2 schwenken kann.

Der Lagerbasiskörper 33 ist beispielsweise mittels einer Mutter 23 mit einem Trägerelement 24 verschraubt. Die Mutter 23 ist auf einen Schraubabschnitt 43 der Hohlwelle 34 aufgeschraubt, der eine Durchtrittsöffnung 25 am Trägerelement 24 durchdringt.

Das Trägerelement 24 ist weist eine Mulde auf, in deren Bodenbereich sich die Durchtrittsöffnung 25 befindet. Vor das Trägerelement 24 steht seitlich ein Flansch 26 vor, der sich an dem plattenartigen Fahrzeughalterungsteil 21 abstützt. Dieses hat eine Durchtrittsöffnung 27, in die das Trägerelement 24 von der Vorderseite 22 der eingesetzt ist, so dass sich dessen Mulde in die Durchtrittsöffnung 27 hinein erstreckt und vor die Rückseite des Fahrzeughalterungsteils 21 nach hinten vorsteht. Das Trägerelement 24 ist anhand von Schrauben 28 oder sonstigen Montageelementen am Fahrzeughalterungsteil 21 fixiert.

Die Fahrzeughalterung 20 umfasst weiterhin ein Stützteil 50. Das Stützteil 50 weist eine ringförmige Gestalt auf. Das Stützteil 50 hat also eine Durchtrittsöffnung 51, wobei diese Durchtrittsöffnungvom Lagerbasiskörper 33 durchdrungen ist. Mithin erstreckt sich also der Lagerbasiskörper 33 durch die Durchtrittsöffnungen 25, 27, 51 hindurch. Nach radial innen in Richtung der Durchtrittsöffnung 51 vorstehende Bereiche des Stützteils 50 bilden später noch erläuterte Stützabschnitte.

Das Stützteil 50, das in den Figuren 37-42 deutlicher dargestellt ist, hat an seiner der Vorderseite 22 zugewandten Rückseite 52 Einschrauböffnungen 53 oder Durchtrittsöffnungen, in die die Schrauben 28 eingeschraubt werden können oder die von den Schrauben 28 durchdrungen werden können. Der Montageflansch 47 ist quasi als eine Zwischenlage sandwichartig zwischen einerseits die Platte des Fahrzeughalterungsteils 21 und andererseits das Stützteil 50 geklemmt, wobei die Schrauben 28 Durchtrittsöffnungen 49 am Montageflansch 47 und mit diesen fluchtende Durchtrittsöffnungen am Fahrzeughalterungsteil 21 durchdringen und in die Einschrauböffnungen 53 eingeschraubt sind. Insgesamt ist also der Lagerbasiskörper 33 fest mit der Fahrzeughalterung 20 verbunden.

An der Rückseite 52 gegenüberliegenden Vorderseite 54 des Stützteils 50 ist eine Lagerfläche 55 vorgesehen, in die das zweite Schwenk-Lagerelement 32 mit seiner der Fahrzeughalterung 20 zugewandten Längsendbereich mit seinem stirnseitigen Außenumfang eingreift. Dort befindet sich eine Lagerfläche 57 des Lagerelements 32. Die Lagerfläche 55 definiert eine Lageraufnahme 56, in der das zweite Schwenk-Lagerelement 31 schwenkbeweglich aufgenommen ist, nämlich um die Schwenkachse S2. Die Lagerfläche 55 und die Lagerfläche 57 sind schräg verlaufend, zum Beispiel etwa konisch oder ausgerundet konisch, so dass das Lagerelement 32 im Sinne eines Zentrierens in der Lageraufnahme 56 aufgenommen ist. Dabei ist es möglich, dass die Lagerflächen 55, 57 stets in Eingriff miteinander sind oder auch beispielsweise nur in der Gebrauchsstellung G und/oder der Nichtgebrauchsstellung N oder über einen Teilabschnitt der Verstellbewegung der Anhängekupplung zwischen diesen Endstellungen, zum Beispiel zwischen der Gebrauchsstellung G und der Zwischenstellung Z.

Zur Abstützung und ortsfesten Fixierung des Kupplungsarms 11 dient ein Fixierelement 60, das in Figur 40 deutlich dargestellt ist. In einer Fixierstellung F ist das Fixierelement 60 zu dem Lagerelement 32 und dem Stützteil 50 hin verstellt und in einem formschlüssigen Eingriff mit diesen beiden Bauteilen. Es zweckmäßigerweise auch vorgesehen, dass das Fixierelement 60 einen Klemmsitz ermöglicht, das heißt dass in der Fixierstellung F das Stützteil 50 zwischen das Lagerelement 32 und das Fixierelement 60 geklemmt ist.

Das Fixierelement 60 bildet einen ersten Zangenschenkel 61, das Lagerelement 32 einen zweiten Zangenschenkel 62.

Das Lagerelement 32 ist bezüglich des Stützteils 50 linear ortsfest, kann also beispielsweise in Richtung der Stellachse B1 oder Schwenkachse S1 nicht relativ zum Stützteil 50 verschoben werden. Das Lagerelement 32 ist bezüglich des Stützteils 50, mithin also der Fahrzeughalterung 20 nur schwenkbar, nämlich um die Schwenkachsen S1, S2. Das Zangenschenkel 61 bzw. das Fixierelement 60 wird also zum Lagerelement 32 und Stützteil 50 hin verstellt, um die Fixierstellung F zu erzielen oder davon weg, um eine Lösestellung L einzunehmen, in welcher der Kupplungsarm 11, der fest mit dem Lagerelement 32 verbunden ist, zwischen der Gebrauchsstellung G und der Nichtgebrauchsstellung N verstellbar ist.

Die Fixierstellung F nimmt das Fixierelement 60 vorteilhaft in der Gebrauchsstellung G als auch der Nichtgebrauchsstellung G ein, wobei es auch möglich wäre, dass das Fixierelement 60 nur in der Gebrauchsstellung G oder der Nichtgebrauchsstellung N die Fixierstellung F einnimmt.

Der Zangenschenkel 61 oder das Fixierelement 60 wird vorliegend entlang der Schwenkachse S1 linear verstellt, wobei dies nicht zwingend ist.

Es kann beispielsweise auch ein Gewinde oder eine Schrägflächenanordnung vorgesehen sein, um das Zangenschenkel 61 in Richtung des anderen Zangenschenkels 62 zu verstellen. Weiterhin ist es exemplarisch zu verstehen, dass nur einer der Zangenschenkel, nämlich der Zangenschenkel 61, betätigt wird. Es ist durchaus auch möglich, dass beispielsweise das zweite Lagerelement 32, mithin also der andere Zangenschenkel 62, beispielsweise linear entlang der Schwenkachse S1 vom Stützteil 50 weg in die Lösestellung L verstellt wird. Es können also beispielsweise einer oder beide Zangenschenkel 61, 62 zwischen der Lösestellung L und der Fixierstellung F bewegbar sein, wobei eine Linearbewegung nur eine Option darstellt. Es ist z.B. auch möglich, dass einer oder mehrere Zangenschenkel schwenkbar an einem Schwenklager angeordnet sind und um die Schwenkachse dieses Schwenklagers aufeinander zu oder voneinander weg beweglich sind.

Das Fixierelement 60 hat eine Durchtrittsöffnung 63, die von dem Lagerbasiskörper 33 durchdrungen ist. Das Fixierelement 60 weist eine Aufnahmevertiefung 64 auf, an deren Boden 65 sich die Durchtrittsöffnung 63 befindet. Zwischen dem Boden 65 und einer sich in der Art eines Kragens um die Durchtrittsöffnung 63 herum erstreckenden Stirnseiten-Stützfläche 67 erstreckt sich eine Umfangswand 66. Die Umfangswand 66 hat einen bogenförmigen Verlauf, so dass die Aufnahmevertiefung 64 in der Art einer Mulde ausgestaltet ist.

Vor die Umfangswand 66 und die Stirnseiten-Stützfläche 67 stehen Formschlusskonturen 68 vor, die zum Eingriff in Gegen-Formschlusskonturen 69 und 70 vorgesehen sind, die sich am Stützteil 50 sowie am Lagerelement 32 befinden.

Die Formschlusskonturen 68, 69, 70 sind in einem Winkelabstand zueinander beabstandet, das heißt sie erstrecken sich ringförmig um die jeweilige Durchtrittsöffnung 63, 51, 48 herum. Dabei ist die Winkeldistanz zwischen den Formschlusskonturen 68, 69, 70 so gewählt, dass sie in den jeweiligen Endstellungen der Anhängekupplung 10, nämlich der Gebrauchsstellung G und der Nichtgebrauchsstellung N, ineinander formschlüssig eingreifen können, jedoch in den Zwischenstellungen, zum Beispiel der Zwischenstellung Z, nicht ineinander passen. Beispielsweise sind Gruppen 68a, 69a, 70a und 68b, 69b, 70b von Formschlusskonturen 68, 69, 70 vorgesehen, die sich über jeweils einen Teilkreis erstrecken und deren Formschlusskonturen 68, 69, 70 zwischen einander jeweils denselben Winkelabstand zueinander haben, der jedoch nicht demjenigen Winkelabstand zwischen den Gruppen 68a, 69a, 70a und 68b, 69b, 70b entspricht, so dass also eine Winkelcodierung gegeben ist. Selbstverständlich könnte man auch geeignete, nur in definierten Winkelpositionen, insbesondere der Gebrauchsstellung G und der Nichtgebrauchsstellung N, zueinander passende Geometrien der Formschlusskonturen 68, 69, 70 als Winkelcodierung vorsehen.

Die Formschlusskonturen 68 umfassen Rippen 71, die vor die Stirnseiten-Stützfläche 67 und zudem auch nach radial innen vor die Umfangswand 66 vorstehen, das heißt sich auch in die Aufnahmevertiefung 64 hinein erstrecken. Die Rippen 71 verlaufen über einen Kantenbereich 72 hinweg, über den sich auch die Umfangswand 66 hinweg erstreckt.

Ein Rücken 73 der Rippen 71 ist gerundet und zwar zweckmäßigerweise zum einen entlang der Längserstreckungsrichtung 74 eine jeweiligen Rippe 71, sowie zum andern zweckmäßigerweise auch quer dazu. Es könnte selbstverständlich auch nur eine sich in Längserstreckungsrichtung 74 oder sich nur quer dazu erstreckende Rundung vorgesehen sein. Mithin könnte also beispielsweise quer zur Längserstreckungsrichtung 74 anstelle einer Rundung auch beispielsweise eine Kante zwischen der Oberseite (Rücken 73) und einer Seitenflanke 75 einer jeweiligen Rippe 71 vorgesehen sein. Zweckmäßigerweise folgt der Rücken 73 dem Verlauf der Umfangswand 66 etwa parallel.

Eine vorteilhafte Ausführungsform sieht vor, dass die Seitenflanken 75, die etwa rechtwinkelig zur Oberfläche der Stirnseiten-Stützfläche 67 sind, mit Rundungen in die Stirnseiten-Stützfläche 67 übergehen. Mithin ist also sozusagen ein Kehlbereich zwischen den Seitenflanken 75 und der benachbarten Fläche, nämlich der Stirnseiten-Stützfläche 67, vorteilhaft ausgerundet.

Die Rippen 71 laufen an einem Längsendbereich flach zur benachbarten Fläche aus, nämlich im Bereich des Bodens 65. Am anderen Längsende stehen die Seitenflanken 75 sozusagen steil nach oben vor die Stirnseiten-Stützfläche 67 vor. Das kann vorteilhaft den Halt der Rippen 71 in den Gegen-Formschlusskonturen 69 oder 70 verbessern.

Die Gegen-Formschlusskonturen 69 und 70 weisen Aufnahmenuten 76, 77 auf, in die die Rippen 71 eingreifen, wenn die Fixierstellung F erreicht ist. Die Aufnahmenuten 76, 77 sind beispielsweise im Querschnitt U-förmig, d.h. sie weisen Seitenwände auf, die Seitenflanken 78 zum Abstützen der Seitenflanken 75 der Rippen 71 bilden.

Man erkennt z.B. in Figur 41, dass sich die Rippen 71 in den Aufnahmenuten 76 mit ihren Seitenflanken 75 flächig an den jeweils gegenüberliegenden Seitenflanken 78 abstützen. Ein Innenabstand zwischen den Seitenflanken 78 entspricht etwa einem Außenabstand der Seitenflanken 75, so dass ein formschlüssiger Halt in beiden Drehrichtungen bezüglich der Schwenkachse S1 gegeben ist.

Die Aufnahmenuten 76 münden frei an der Lagerfläche 55 aus. Gegenüberliegend zu diesen freien Ausmündungen befindet sich ein ausgerundeter Endabschnitt einer jeweiligen Aufnahmenut 76, wobei dies nicht notwendig ist, da ja der Längsendbereich der darin positionierten Rippe 71 (Figur 41) nicht bis zu dieser Ausrundung reicht.

Zwischen einem Boden 79 der Aufnahmenut 76 und der Seitenflanke 78 ist ebenfalls eine Rundung vorgesehen, so dass die Aufnahmenut 76 im Querschnitt U-förmig ist.

Das Fixierelement 60 wird von dem Lagerelement 31, 32 bei der Schwenkbewegung um die Schwenkachse S1 mitgenommen. Aus diesem Grund fluchten die Rippen 71 und die Aufnahmenuten 77 am Lagerelement 32 stets. Dies ist aber nicht notwendig, das heißt es wäre auch möglich, dass das Fixierelement 60 bezüglich der Schwenkachse S1 drehfest ist und nur entlang dieser Schwenkachse, die vorliegend zugleich eine Stellachse B1 für das Fixierelement 60 darstellt, schiebebeweglich ist, d.h. dass sich das Lagerelement 32 relativ zum Fixierelement 60 bei der Verstellung zwischen der Gebrauchsstellung G und der Nichtgebrauchsstellung N dreht. In diesen beiden Endstellungen jedoch ist es jedenfalls vorgesehen, dass sich die Rippen 71 einerseits und die miteinander fluchtenden Aufnahmenuten 76, 77 drehwinkelrichtig gegenüberliegen, so dass das Fixierelement 60 in formschlüssigen Eingriff mit dem Lagerelement 32 und dem Stützteil 50 gebracht werden kann, was in Figur 41 deutlich wird.

Zwar greifen die Formschlusskonturen 68 in die Gegen-Formschlusskonturen 69, 70 ein, so dass der Kupplungsarm 11 unverdrehbar an der Fahrzeughalterung 20 gehalten ist, wenn die Fixierstellung F vorliegt. Es ist in diesem Zusammenhang festzustellen, dass die ineinander eingreifenden Formschlusskonturen 68, 69 bereits eine Drehfestigkeit des Kupplungsarms 11 bezüglich der Fahrzeughalterung 20 herstellen, weil ja das Fixierelement 60 drehfest mit dem Lagerelement 31, 32 bezüglich der Schwenkachse S1 ist.

Eine zusätzliche Verklemmung ist jedoch zweckmäßig, insbesondere um beim Fahrbetrieb unangenehme Geräusche zu vermeiden (Klappern oder dergleichen) . Das Fixierelement 60 begrenzt zusammen mit dem Lagerelement 32, also einem ersten Gegenhaltkörper, eine Klemmaufnahme 58 für das Stützteil 50, das einen zweiten Gegenhaltkörper darstellt. Durch die Lagerfläche 55 des Lagerelements 32 einerseits und die Oberseite der Stirnseiten-Stützfläche 67 und/oder andererseits die Rücken 73 der Rippen 71 wird diese Klemmaufnahme 58 seitlich begrenzt. Die Lagerfläche 55 verläuft dabei genauso wie die Lageraufnahme 56 schräg, was einen Keileffekt oder Klemmeffekt bewirken kann.

Es ist möglich, dass zwischen einerseits den Formschlusskonturen 68 und andererseits den Gegen-Formschlusskonturen 69 und/oder den Gegen-Formschlusskonturen 70 eine gewisses Drehspiel vorhanden ist (z.B. um die Schwenkachse S1), d.h. dass die Formschlusskonturen 68-70 sozusagen eine formschlüssig wirkende Verdrehsicherung darstellen. Das Fixierelement 60 und das Lagerelement 32 können das Stützteil 50 und mithin die Fahrzeughalterung 20 in diesem Fall sozusagen im Wesentlichen klemmen, was für den normalen Fahrbetrieb ausreicht. Nur für den Fall, das außergewöhnlich hohe Belastungen auftreten oder auch ein Verschleiß, wirken dann die Formschlusskonturen 68-70.

Das Fixierelement 60 wird von einem Fixierantrieb 80 angetrieben. Der Fixierantrieb 80 umfasst einen stiftartigen oder bolzenartigen Betätigungskörper 81, der im Innenraum 35 der Hohlwelle 34, mithin also direkt im Lager 30 angeordnet ist. Der Betätigungskörper 81 ist entlang einer Stellachse B1, vorliegend koaxial mit der Schwenkachse S1, linear hin und her verschieblich, wobei er in einer in einem Sinne von der Fahrzeughalterung 20 weg verstellten Position, entsprechend der Fixierstellung F, Übertragungselemente 82, beispielsweise Kugeln, nach radial außen durch Durchtrittsöffnungen 83 hindurch verdrängt, wobei diese dann ein Kraftübertragungselement 84 ebenfalls in einem Sinne von der Fahrzeughalterung 20 weg betätigen. Das Kraftübertragungselement 84 ist mit dem Fixierelement 60 bezüglich der Stellachse B1, vorliegend der Schwenkachse S1, verschiebefest verbunden.

Wenn das Fixierelement 60 nicht mit dem Lagerelement 31 dreht, sondern bezüglich der Fahrzeughalterung 20 drehfest ist, könnte beispielsweise an der Schnittstelle zwischen dem Kraftübertragungselement 84 und dem Fixierelement 60 eine Drehlagerung vorgesehen sein. Es ist auch möglich, dass das Kraftübertragungselement 84 drehbar am Lagerbasiskörper 33 gelagert ist. Vorliegend ist das Kraftübertragungselement 84 drehfest mit dem Lagerelement 31 verbunden, das heißt das Lagerelement 31 nimmt das Kraftübertragungselement 84 bei seiner Drehung um die Schwenkachse S1 mit.

Das Kraftübertragungselement 84 umfasst eine Hülse 85. Das Kraftübertragungselement 84 ist mit dem Fixierelement 60 fest verbunden. Beispielsweise ist Längsende des Kraftübertragungselements 84 bei der Fahrzeughalterung 20 in oder an der Durchtrittsöffnung 63 des Fixierelements 60 befestigt. Beispielsweise greift dieses Längsende in die Durchtrittsöffnung 63 ein und ist dort beispielsweise angeklebt, angeschweißt oder dergleichen anderweitig fest befestigt.

Es wäre selbstverständlich möglich, dass das Kraftübertragungselement 84 und das Fixierelement 60 einstückig sind, so dass beispielsweise eine pilzartige Kontur gebildet ist, deren "Dach" sozusagen das Fixierelement 60 darstellt und die als "Stiel" einen Hülsen- oder Rohrkörper hat, der vom Lagerbasiskörper 33 durchdrungen ist.

Das Kraftübertragungselement 84 wird von dem Lagerbasiskörper 33 durchsetzt. Das Kraftübertragungselement 84 stützt sich beispielsweise mit einem näher bei der Fahrzeughalterung 20 befindlichen Stützabschnitt 86 und einem weiter davon entfernteren Stützabschnitt 87 an dem Lagerbasiskörper 33 ab. Mit den Stützabschnitten 86, 87 ist das Kraftübertragungselement 84 drehbar am Lagerbasiskörper 33 gelagert.

Eine vorteilhafte Maßnahme kann vorsehen, dass das erste Lagerelement 31 an dem Kraftübertragungselement 84 abgestützt ist. Beispielsweise stützt sich der Hülsenkörper 36 mit seinem Innenumfang am Außenumfang der Hülse 85 oder des Kraftübertragungselements 84 ab. Dort könnte auch eine Drehlagerung vorgesehen sein, d.h. dass das Lagerelement 31 drehbar am Kraftübertragungselement 84 gelagert ist. Vorliegend ist jedoch eine Drehmitnahme vorhanden, d.h. dass z.B. ein Drehmitnahmekörper 88, zum Beispiel ein Stift, das Kraftübertragungselement 84 mit dem Lagerelement 31 drehfest verbindet. Das Kraftübertragungselement 84 und das Lagerelement 31 können z.B. einstückig sein oder miteinander stoffschlüssig verbunden sein, zum Beispiel verklebt oder verschweißt.

Zur Begrenzung der Drehbewegung zwischen der Gebrauchsstellung G und der Nichtgebrauchsstellung N dienen vorzugsweise Anschläge 98. An den Anschlägen 98 schlägt beispielsweise der Drehmitnahmekörper 88 an, wobei selbstverständlich auch ein anderes drehendes Bauteil an einem der Anschläge 98 anschlagen könnte. Die Anschläge 98 sind vorzugsweise als Bolzen ausgestaltet, könnten aber auch einstückig mit einem dreh- oder ortsfesten Bauteil, beispielsweise mit dem Stützteil 50, sein. Die Anschläge 98 sind in zugeordnete Aufnahmen 99 am Stützteil 50 eingesteckt.

Der Betätigungskörper 81 ist beispielsweise durch eine Feder 89 in Richtung der Fixierstellung F belastet. Schräg verlaufende Betätigungsflächen 90 am Außenumfang des Betätigungskörpers 81, insbesondere dessen Kopf, drücken dabei die Betätigungskörper 81 nach radial außen, welche ihrerseits wiederum an die dem Lagerbasiskörper 33 zugewandte Innenseiten des Stützabschnitts 87 angedrückt werden und das Kraftübertragungselement 84 in Richtung der Fixierstellung F verstellen. Die Feder 89 hält diese Fixierstellung F aufrecht.

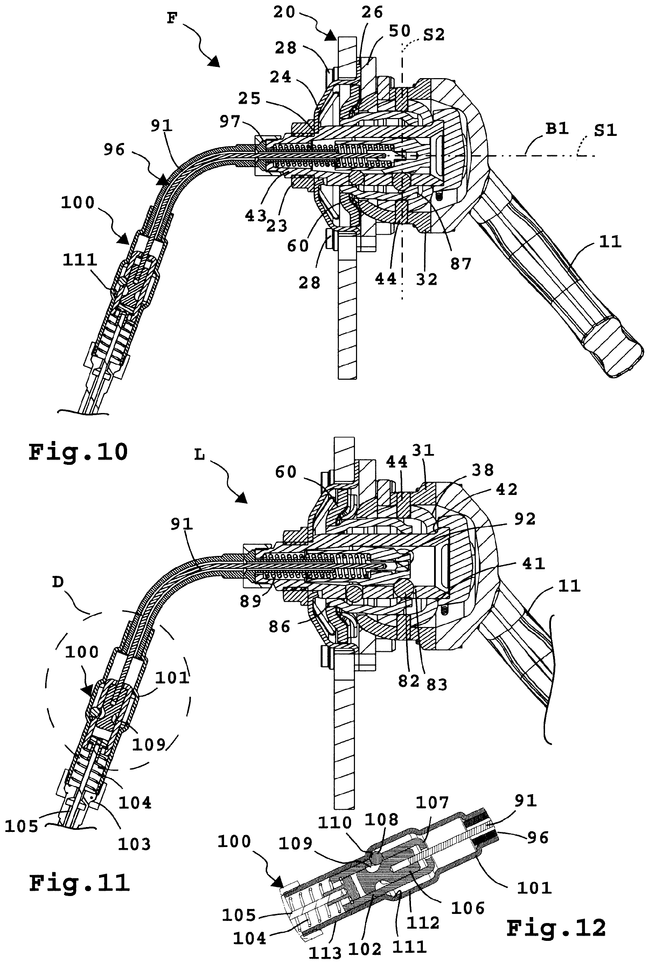

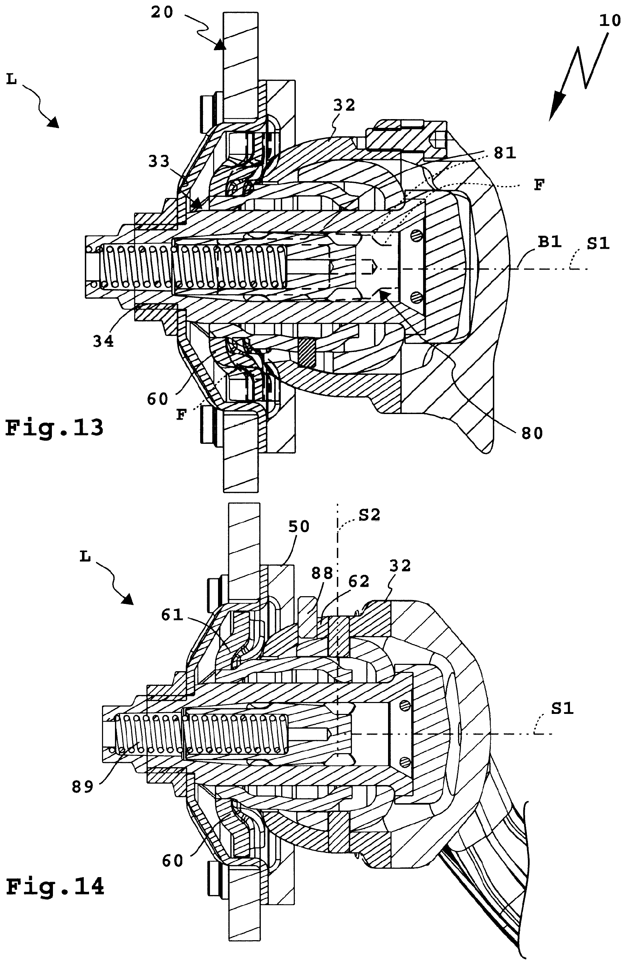

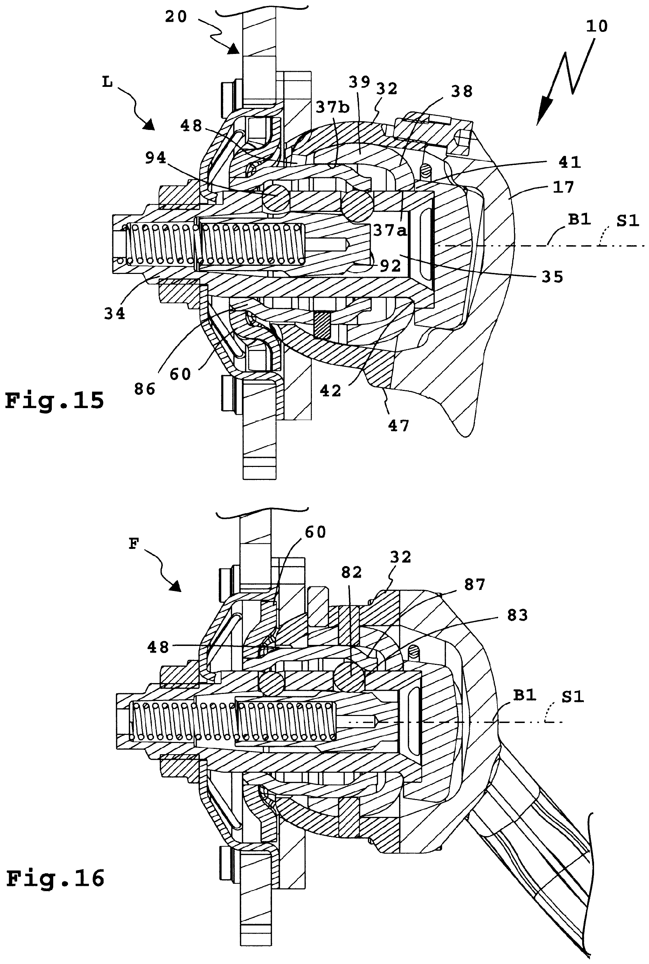

Durch ein Zugorgan 91 ist der Betätigungskörper 81, also beispielsweise der Sperrbolzen, in Richtung der Lösestellung L, vorliegend also zum Fahrzeughalterungsteil 21 hin, betätigbar. Das Zugorgan 91 umfasst beispielsweise ein Zugseil bei den Ausführungsformen gemäß Figuren 10-12. Wenn der Betätigungskörper 81 in Richtung der Lösestellung L verstellt ist (siehe beispielsweise Figur 13, 15), können die Kugeln oder Übertragungselemente 82 nach radial innen durch die Durchtrittsöffnungen 83 hindurch in Richtung des Innenraums 35 zurückfallen, beispielsweise durch entsprechend schräg verlaufende, einen Bewegungsraum für die Übertragungselemente 82 bereitstellende konische Flächen am Betätigungskörper 81 oder wie vorliegend realisiert durch eine Aufnahmevertiefung 92 am Kopf des Betätigungskörpers 81. Dadurch wird das Kraftübertragungselement 84 in Richtung der Stellachse B1 beweglich, kann also in Richtung der Lösestellung L verstellt werden und somit das Fixierelement 60 aus der das Stützteil 50 zangenartig umklammernden Stellung gelangen. Dann kann der Kupplungsarm 11 zwischen der Gebrauchsstellung G und der Nichtgebrauchsstellung N verstellt werden.

Dies stellt zunächst ein sozusagen passives Konzept dar, d.h. es müssten an sich zusätzliche Maßnahmen ergriffen werden, um das möglicherweise fest in das Stützteil 50 und das Lagerelement 32 eingreifende Fixierelement 60 zu lösen, was beispielsweise bei einer manuellen Betätigung der Anhängekupplung 10 umständlich und unangenehm ist. Hier greift eine weitere Maßnahme an:

Der Fixierantrieb 80 wirkt nicht nur im Sinne einer Fixierung, sondern auch im Sinne eines Lösens der Fixierung und bildet somit auch einen Löseantrieb für die Fixierung. Der Betätigungskörper 81 hat einem Lösen der Fixierung zugeordnete Betätigungsflächen 93, die bei einer Verstellung des Betätigungskörpers 81 in Richtung der Lösestellung L Löse-Übertragungselemente 94 durch Durchtrittsöffnungen 95 des Lagerbasiskörpers 33 nach radial außen hin verdrängt, welche ihrerseits wiederum auf eine schräg verlaufende Innenflanke, also einer Löse-Betätigungsfläche, des Stützabschnitts 86 der Hülse 85 bzw. des Kraftübertragungselement 84 wirkt und somit das Kraftübertragungselement 84 entlang der Stellachse B1 in Richtung der Lösestellung L betätigt. Dieses verstellt dann aktiv das Fixierelement 60 in die Lösestellung L.

Der Fixierantrieb 80 ist abgesehen von den außen auf ihn einwirkenden Komponenten vollständig im Innenraum des Lagers 30 aufgenommen. Dadurch ist der Fixierantrieb 80 vor Umwelteinflüssen geschützt und ermöglicht zu dem eine besonders kompakte Bauweise.

Eine weitere, eine sich eine eigenständige Erfindung darstellende Maßnahme ist es, dass in einem Lagerbasiskörper in der Art des Lagerbasiskörpers 33 ein Fixierantrieb angeordnet ist und dieser Lagerbasiskörper eine Kardanachse bereitstellt, an der dann in Gestalt beispielsweise des Lagerelements 31 ein erstes Lagerelement schwenkbar gelagert ist, das seinerseits wiederum ein zweites Lagerelement in Gestalt beispielsweise des Lagerelements 32 um eine zweite Kardanachse schwenkbar lagert.

Weiterhin ist es vorteilhaft und stellt an sich eine eigenständige Erfindung dar, dass ein Kraftübertragungselement eines Fixierantriebs oder Löseantriebs, nämlich beispielsweise das Kraftübertragungselement 84, gleichzeitig eine Lagerkomponente darstellt, beispielsweise zum Lagern des Lagerelements 31 an dem Lagerbasiskörper 33.

Nachfolgend werden verschiedene Betätigungskonzepte für den Löseantrieb oder Fixierantrieb 80 erläutert:
Die in den Figuren 3, 10-12 dargestellte manuelle Variante der Betätigung sieht beispielsweise vor, dass das Zugorgan 91 von der Seele eines Bowdenzugs 96 gebildet ist, der am freien, von der Fahrzeughalterung 20 abstehenden Endbereich des Lagerbasiskörpers 33 oder der Hohlwelle 34 festgelegt ist, beispielsweise anhand eines Montageelements 97, zum Beispiel einer Mutter.

Der Bowdenzug 96 könnte beispielsweise anhand eines im Gepäckraum des Kraftfahrzeugs K angeordneten Betätigungselements, zum Beispiel einer dort angeordneten Aufwickel-Rolle, eines Betätigungshebels oder dergleichen, direkt betätigt werden. Vorliegend ist jedoch einem derartigen Betätigungselement, das selbstverständlich auch einen Antriebsmotor umfassen kann, eine Sicherungseinrichtung 100 vorgelagert. Die Sicherungseinrichtung 100 blockiert eine Verstellung des Betätigungskörpers 81 in Richtung der Lösestellung L, wenn der den Betätigungskörper 81 antreibende Antrieb nicht in diese Lösestellung L verstellt ist, sondern sich noch in der Fixierstellung F befindet.

Die Sicherungseinrichtung 100 umfasst ein Gehäuse 101, in welchem ein Zugelement 102 axial verschieblich aufgenommen ist.

An einem Boden 103 des Gehäuses 101, der zum Beispiel durch einen Deckel gebildet wird, stützt sich eine Feder 104 ab, die sich zudem noch am Zugelement 102 abstützt. Die Feder 104 belastet also das Zugelement 102 in einem Sinne zu dem Zugorgan 91 hin. Das Zugelement 102 ist mit einem weiteren Zugorgan 105, zum Beispiel einem Seil oder Zugseil eines weiteren Bowdenzugs, einer Zugstange oder dergleichen, verbunden.

Wenn das Zugorgan 105 gezogen wird, entgegen der Kraft der Feder 104, wird dabei das Zugelement 102 in einem Sinne eines Ziehens des mit dem Fixierantrieb 80 verbundenen Zugorgans 91 betätigt, der Fixierantrieb 80 also in Richtung der Lösestellung L betätigt.

Nun ist jedoch das Zugorgan 91 nicht ortsfest am Zugelement 102 festgelegt, sondern an einem im Innenraum des Zugelements 102 verschieblich gelagerten Mitnehmer 106 befestigt. Der Mitnehmer 106 kann sich an einem Boden 107 des Zugelements 102 abstützen, wenn dieses in Richtung der Lösestellung L betätigt wird, so dass auch das den Boden 107 durchdringende Zugorgan 91 in Richtung der Lösestellung L mitgenommen wird.

Wenn jedoch die Sicherungseinrichtung 100 nicht aktiv in Richtung der Lösestellung L vom Zugorgan 105 betätigt wird, sondern sich das mit dem Fixierantrieb 80 verbundene Zugorgan 91 sozusagen von selbst in Richtung der Lösestellung L verstellt, verschiebt dieses Zugorgan 91, das in diesem Fall sozusagen ein Druckorgan ist, den Mitnehmer 106 in Richtung der Lösestellung, während jedoch das Zugelement 102 nicht in Richtung der Lösestellung L verstellt wird, sondern in einer der Fixierstellung F entsprechenden Position bleibt. Bei dieser Bewegung des Mitnehmers 106 in Richtung der Lösestellung L wird mindestens ein, beispielsweise eine Kugel oder einen sonstigen Kraftübertragungskörper umfassendes, Sicherungselement 108, das man auch als einen Blockierkörper betrachten kann, aus einer umfangsseitigen Vertiefung 109 des Mitnehmers 106 nach außen durch eine Durchtrittsöffnung 110 des Zugelements 102 hindurch verdrängt und stützt sich an einer Stützfläche 111 des Gehäuses 101 ab. Das Sicherungselement 108 wird also vom Mitnehmer 106 nach radial außen vor den Außenumfang des Zugelements 102 verdrängt und blockiert so eine weitere Bewegung des Zugelements 102 in Richtung der Lösestellung L, in Figur 12 beispielsweise nach schräg links unten. Das Sicherungselement 108 verhindert so eine weitere Verstellung des Mitnehmers 106 und somit auch des Zugorgans 91 in Richtung der Lösestellung L. Somit blockiert und verhindert also die Sicherungseinrichtung 100 ein unbeabsichtigtes Verstellen des Zugorgans 91 und somit auch des Betätigungskörpers 81 in Richtung der Lösestellung L.

Die Stützfläche 111 wird beispielsweise von einem umfangsseitig einen größeren Durchmesser aufweisenden Abschnitt 112 des Gehäuses 101 gebildet. In einem daneben liegenden, engeren Abschnitt 113 ist das Gehäuse 101 verschieblich gelagert.

Bei einer aktiven Entriegelungsbetätigung oder Lösebetätigung hingegen wirkt die Stützfläche 111 im Sinne eines Verdrängens des Sicherungselements 108 nach radial innen in die Vertiefung 109 des Mitnehmers 106 hinein, so dass das Sicherungselement 108 nicht nach außen vor die umfangsseitige Lagerfläche des Zugelements 102 vorsteht und eine weitere Verstellung desselben in Richtung des Abschnittes 113, zur Lösestellung L hin, blockiert.

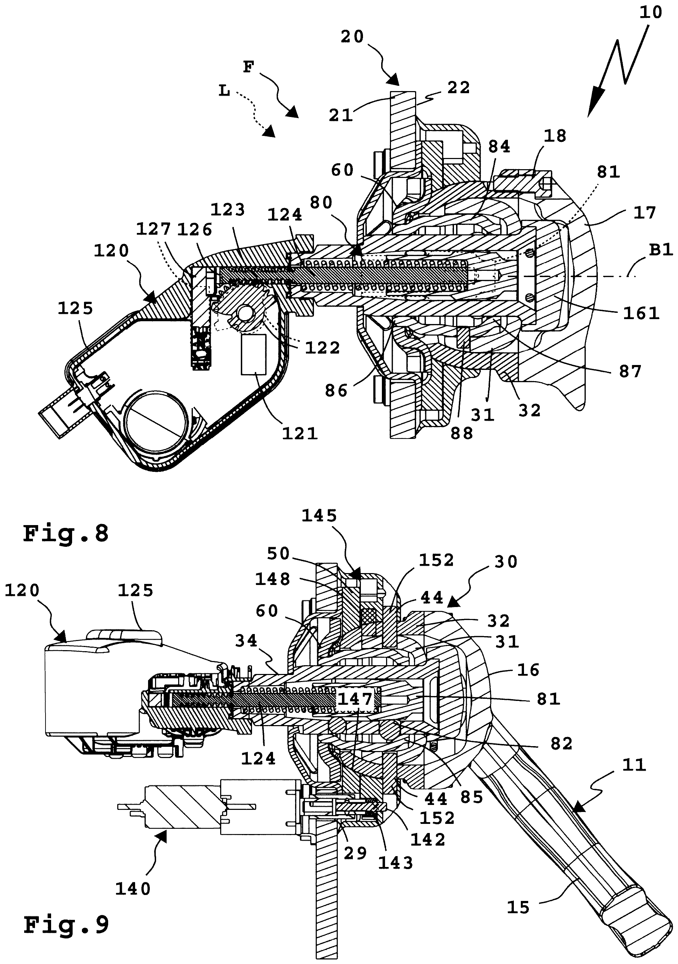

Ein motorisches Antriebskonzept zur Betätigung des Betätigungskörpers 81 in Richtung der Lösestellung L oder der Fixierstellung F ist beispielsweise in den Figuren 8 und 9 dargestellt. Ein Antriebsmodul 120 umfasst beispielsweise einen Motor 121, zum Beispiel einen Elektromotor, der ein Ritzelelement 122 antreibt. Das Ritzelelement 122 kämmt mit einem Zahnstangenabschnitt 123 eines Zugstabs 124 oder eines sonstigen Zugelements. Der Zugstab 124 ist z.B. zumindest teilweise im Innenraum des Betätigungskörpers 81 angeordnet. Der Zugstab 124 erstreckt sich durch den Innenraum 35 der Hohlwelle 34 hindurch und steht nach hinten vor die Hohlwelle 34 mit seinem Zahnstangenabschnitt 123 vor. Der Zahnstangenabschnitt 123 steht in ein Gehäuse 125 des Antriebsmoduls 120 vor, wo auch die übrigen Antriebskomponenten vorgesehen sind.

Einer Stirnseite 126 des Zugstabes 124 liegt ein Sicherungselement 127 gegenüber, das in der Fixierstellung F eine Verstellung des Zugstabes 124 in Richtung der Lösestellung L blockiert. In diesem Fall stößt die Stirnseite 126 am Sicherungselement 127 an und ist somit gegen eine unbeabsichtigte axiale Verstellung gesichert. Der Motor 121 treibt über ein nicht dargestelltes Getriebe oder eine Ablaufsteuerung zunächst das Sicherungselement 127 aus dem Bewegungsbereich des Zugstabes 124 heraus (gestrichelte, in der Zeichnung untere Stellung), bevor das Ritzelelement 122 den Zugstab 124 in Richtung der Lösestellung L verstellt (gestrichelte, in der Zeichnung nach links geschwenkte Stellung des Ritzelelements 122 und nach links verschobene Stellung des Zugstabs 124).

Wenn auf diese zusätzliche Sicherung nicht ankommt, kann beispielsweise auch wie in Figur 5 angedeutet ein Motor 130 eine Antriebsscheibe 131 antreiben, die sozusagen eine Spindelmutter darstellt. Die Antriebsscheibe 131 (siehe auch Figuren 32, 33) ist von einem Gewindeabschnitt 132 einer Antriebswelle 133 durchdrungen, mit dem beispielsweise der Betätigungskörper 81 sozusagen in die Lösestellung L und/oder die Fixierstellung F gespindelt werden kann. Eine zwischengeschaltete, in Richtung der Fixierstellung F wirkende Feder ist dann zwar vorteilhaft, jedoch nicht notwendig, wie später noch deutlich wird.

Die Anhängekupplung 10 kann beispielsweise manuell entriegelt und verriegelt, aber auch manuell zwischen der Gebrauchsstellung G und der Nichtgebrauchsstellung N verstellt werden. Die vorgestellten Antriebskonzepte mit dem Motor 130 oder dem Antriebsmodul 120 ermöglichen zudem auch eine komfortable Entriegelung. An dieser Stelle sei erwähnt, dass beispielsweise die Sicherungseinrichtung 100 auch in den Zugstab 124 integriert sein könnte, so dass dieser mit Bewegungsspiel entlang der Stellachse B1 auf den Betätigungskörper 81 wirkt und gegen eine unbeabsichtigte Bewegung in Richtung der Lösestellung L gesichert ist. Die Sicherungseinrichtung 100 könnte auch in das Antriebsmodul 120 integriert sein oder zwischen das Antriebsmodul 120 und den Zugstab 124 geschaltet sein oder in den Zugstab 124 integriert sein, wobei dann beispielsweise das Zugorgan 91 mit dem Zahnstangenabschnitt 123 verbunden wäre und am oder anstelle des anderen Zugorgans 105 ein entsprechender, mit dem Ritzelelement 122 zusammenwirkender Zahnstangenabschnitt vorgesehen sein könnte.

Eine an sich manuell zu betätigende Anhängekupplung 10 kann auch auf besonders einfache und günstige Weise mit einem Schwenkantrieb 140 nachgerüstet oder ausgerüstet werden, der eine motorische, bedienungsfreundliche Verstellung zwischen der Gebrauchsstellung G und der Nichtgebrauchsstellung N ermöglicht.

Der Schwenkantrieb 140 umfasst beispielsweise einen Antriebsmotor 141, zum Beispiel einen Drehantrieb. Der Antriebsmotor 141 ist beispielsweise an der Rückseite der Fahrzeughalterung 20 angeordnet und durchdringt mit seiner Abtriebswelle 142 eine Durchtrittsöffnung 29 des Fahrzeughalterungsteils 21.

An der Abtriebswelle 142 befindet sich ein Ritzel 143, das mit einer bogenförmig verlaufenden Zahnreihe 144 an einem Antriebskörper 145 kämmt. Der Antriebskörper 145 umfasst einen Ring, der eine Durchtrittsöffnung 146 aufweist, in der das Lager 30 aufgenommen ist. Die Durchtrittsöffnung 146 ist konzentrisch mit der ersten Schwenkachse S1. Mithin kann also der Antriebskörper 145, den man auch als Antriebsring bezeichnen kann, um die erste Schwenkachse S1 drehen.

Der Innenumfang der Durchtrittsöffnung 146 bildet zweckmäßigerweise eine Lagerfläche 147, in welcher das Lagerelement 32 mit seinem Außenumfang aufgenommen ist. Beispielsweise ist die Lagerfläche 147 konisch oder wannenförmig. Durch diese Maßnahme wird der Antriebskörper 145 zudem vom Lagerelement 32 an der Fahrzeughalterung 20 gehalten und drehbar gelagert.

An seiner dem Fahrzeughalterungsteil 21 zugewandten Seite hat der Antriebskörper 145 eine Aufnahme 148, in der das Stützteil 50 aufgenommen ist. Somit kann also der Antriebskörper 145 nachträglich angebracht werden oder auch bei der Montage sehr einfach berücksichtigt werden, das heißt er wird beispielsweise auf das Lagerelement 32 von der Seite der Fahrzeughalterung 20, wenn diese noch nicht montiert ist, aufgesteckt. Dann wird die gesamte Einheit ein dem Fahrzeughalterungsteil 21, das bereits das Stützteil 50 trägt, befestigt.

An dieser Stelle sei bemerkt, dass das Stützteil 50 auch einen integralen Bestandteil des Fahrzeughalterungsteils 21 bilden könnte.

Die Zahnreihe 144 ist an einem Innenumfang eines Wandabschnitts 149 vorgesehen, der vor eine der Fahrzeughalterung 20 zugewandten Stirnseite 150 vorsteht.

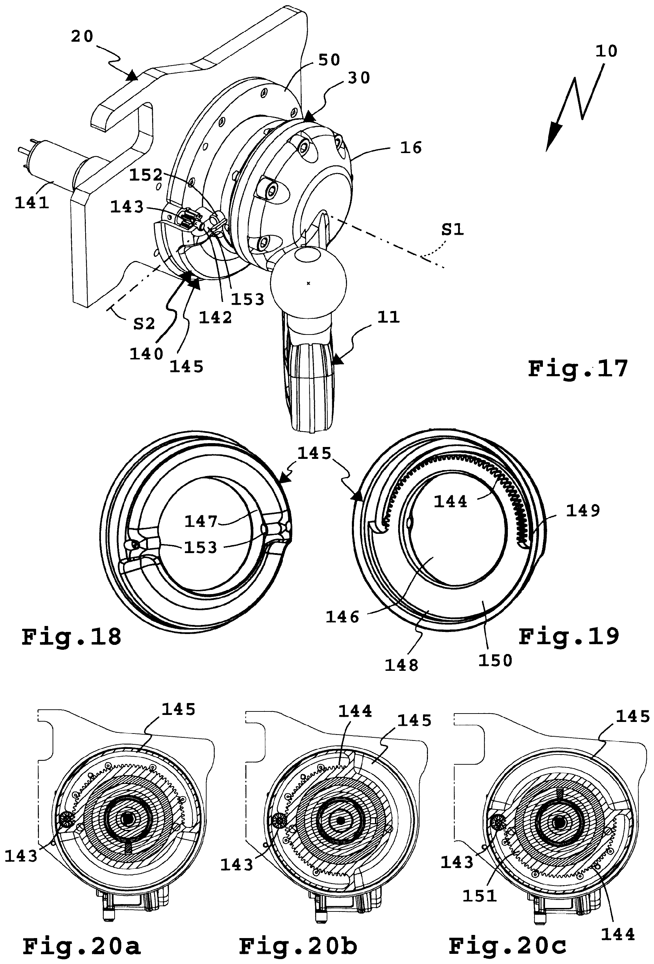

Bei dem in den Figuren 20a-20c dargestellten Ausführungsbeispiel des Antriebskörpers 145 befindet sich die Zahnreihe 144 an einem Außenumfang eines bogenförmig verlaufenden Zahnkörpers 151.

Jedenfalls treibt das Ritzel 143 den jeweiligen Antriebskörper 145 zu einer Schwenkbewegung um die Schwenkachse S2 an, der dann seinerseits wiederum das Lagerelement 31 und das Lagerelement 32 mitnimmt.

Eine besonders günstige Ausführungsform sieht dabei vor, dass der Mitnahmeeingriff des Antriebskörpers 145 im Bereich der zweiten Schwenkachse S2 erfolgt. Es könnte beispielsweise in Verlängerung der Achselemente 44 jeweils noch ein nach radial außen vor das Lagerelement 32 vorstehender Mitnehmer vorgesehen sein. Eine sehr einfache und günstig realisierbare Variante sieht jedoch vor, dass eines oder beide der Achselemente 44 bei dem motorischen Konzept sozusagen nach radial außen verlängert sind bzw. nach radial außen mit einem Mitnahmeabschnitt 152 vorstehen. Die Mitnahmeabschnitte 152 greifen in Mitnahme-Aufnahmen 153 am Antriebskörper 145 ein. Der Antriebskörper 145 nimmt also quasi die Lagerbolzen oder Achselemente 44 zu einer Drehbewegung um die Schwenkachse S1 mit, so dass die Anhängekupplung 10 zwischen der Gebrauchsstellung G und der Nichtgebrauchsstellung N schwenkt.

Die Bewegungssteuerung des zweiten Lagerelements 32 erfolgt über eine Führungsanordnung 160, die kurzzeitig, d.h. also von der Fahrzeughalterung 20 entfernt, vorgesehen ist. Die Führungsanordnung 160 umfasst einen eine erste Führungskomponente bildenden Führungskörper 161, der mittels mindestens eines Sicherungsstiftes 162, beispielsweise den Schenkeln eines Sicherungssplints, die in korrespondierende Öffnungen 163 am Kopf 164 der Hohlwelle 34 eingreifen und mit diesen fluchtende Durchtrittsöffnungen 165 am Führungskörper 161 durchdringen, gesichert ist.

Der Führungskörper 161 bildet sozusagen eine Kappe oder einen Deckel für die frontseitig oder stirnseitig offene Hohlwelle 34.

Der Führungskörper 161 weist eine Stirnwand 166 auf, von der eine Umfangswand 167 absteht. Zwischen der Stirnwand 166 und der Umfangswand 167 befindet sich ein schräger Kantenabschnitt 168.

Die Oberfläche der Stirnwand 166 und/oder des Kantenabschnitts 168 und/oder auch der Umfangswand 167 umfassen oder bilden zweckmäßigerweise eine Führungskulissenfläche 169, die beispielsweise durch gewisse Exzentritäten, Vertiefungen, Vorsprünge und dergleichen andere Führungskonturen relativ zur Schwenkachse S1 und/oder relativ zur Schwenkachse S2 gekennzeichnet ist. An der Stirnwand 166 ist z.B. eine Erhebung 173 vorgesehen, die eine stirnseitige Führung darstellen kann.

Die Führungskulissenfläche 169, die also mehrere Abschnitte umfassen kann oder umfasst, dient zur Führung von Kulissenfolgern 170, die am Lagerelement 32 oder einem mit diesem fest verbundenen Körper, nämlich vorliegend dem Haltekopf 16, vorgesehen sind. Am Haltekopf 16 befindet sich nämlich eine Ausnehmung 19, in die der Kopf 164 mit dem Führungskörper 161 eingreift. In der Ausnehmung 19 sind die beiden Kulissenfolger 170 angeordnet. Beispielsweise umfassen die Kulissenfolger 170 nach radial innen vorstehende, tangential an der Führungskulissenfläche 169 angreifende Stützkörper 171, deren Oberfläche jeweils eine Gleitkulissenfläche 172 darstellt. Die Gleitkulissenfläche 172 gleitet an der Führungskulisse 169 ab, beispielsweise umfangsseitig am Führungskörper 161 entlang, d.h. dass eine radiale Führung gegeben ist, und/oder auch stirnseitig, d.h. an der Oberfläche der Stirnwand 166, so dass quasi eine axiale Führung vorhanden ist.

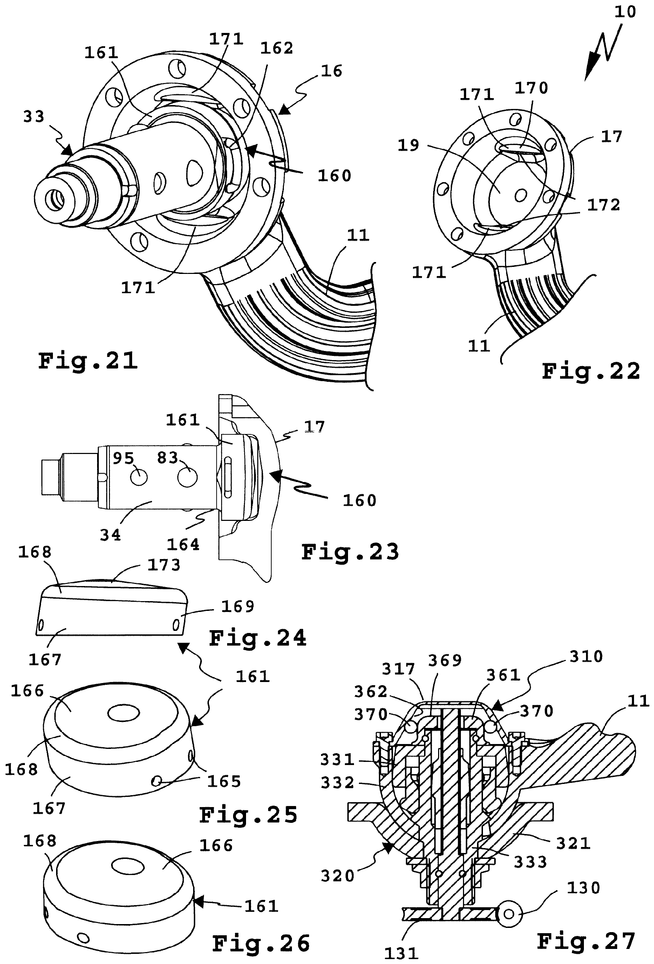

In der Zusammenschau mit Figur 27 wird deutlich, dass dies nur eine Variante darstellt. Bei der dort dargestellten Anhängekupplung 310 ist an deren zweitem Lagerelement 332 ein Deckel 317 vorgesehen, dessen Innenseite eine Gegen-Führungskulissenfläche 362 darstellt. Ein Führungskörper 361 der Anhängekupplung 310, der an sich dem Führungskörper 161 entspricht, hat an seinem radialen Außenumfang eine Führungskulissenfläche 369. Allerdings gleitet die Gegen-Führungskulissenfläche 362 nicht direkt an der sie führenden Führungskulissenfläche 369 entlang, sondern es sind Wälzkörper 370 vorgesehen, die an den Führungskulissenflächen 369 und 362 entlang abholen. Es wäre aber auch möglich, dass die Wälzkörper 370 beispielsweise drehbar an der führenden Komponente (Fahrzeughalterung 320) oder der geführten Komponente (Lagerelement 332) gelagert sind.

Anstelle einer sozusagen von außen her auf das Lager wirkenden Verriegelung könnte auch eine Innenverriegelung vorgesehen sein, was anhand der Anhängekupplung 310 bzw. deren Variante gemäß Figuren 32 und 33 noch deutlich wird. An deren Lagerbasiskörper 333 ist axial verschieblich entlang einer Stellachse B1, die zugleich einer Schwenkachse S1 entspricht, ein Kraftübertragungselement 384 gelagert. Das Kraftübertragungselement 384 kann durch von einem Betätigungskörper 81 betätigbare Übertragungselemente 82 in Richtung einer Fixierstellung F betätigt werden, bei der das Kraftübertragungselement 84 Fixierelemente 360, vorliegend beispielsweise Kugeln, in Richtung einer Fahrzeughalterung 320 betätigt. Die Fixierelemente 360 treten dann durch Durchtrittsöffnungen 363 am Lagerelement 332 hindurch und gelangen in Fixieraufnahmen 364, in welche sie formschlüssig eingreifen.

Ein Fahrzeughalterungsteil 321 der Fahrzeughalterung 320 ist beispielsweise wannenförmig oder muldenförmig und nimmt den fahrzeugseitigen Fußbereich des Lagerelements 332 lagernd auf. Die Fixieraufnahmen 364 befinden sich am Boden der durch das Fahrzeughalterungsteil 321 begrenzten Aufnahme 322 für das Lagerelement 332. Es sind über einen Umfang, der sich um die Schwenkachse S1 erstreckt, zweckmäßigerweise mehrere Fixierelemente 360 und diesem gegenüberliegende Fixieraufnahmen 364 vorgesehen, so dass das Lagerelement 332 spreizfußartig an dem Fahrzeughalterungsteil 321 fixiert werden kann.

Wenn der Betätigungskörper 81 in Richtung der Lösestellung L betätigt wird, können die Übertragungselemente 82 (Kugeln) nach radial innen durch die Durchtrittsöffnungen 83 hindurch gelangen, wodurch das Kraftübertragungselement 384 freikommt und von dem Fahrzeughalterungsteil 321 weg verstellt werden kann, so dass es eine Verstellung der Fixierelemente 360 in Richtung der Lösestellung ermöglicht. Das Kraftübertragungselement 384 gibt dann den Raum hinter den Durchtrittsöffnungen 363 frei, so dass die Fixierelemente 360 in die Durchtrittsöffnungen 363 eindringen können und das Lagerelement 332 schwenkbar wird.

Bei der in den Figuren 30 und 31 dargestellten Variante ist anstelle der Übertragungselemente 82 ein Betätigungshebel 382 vorgesehen, der schwenkbar am Betätigungskörper 381 gelagert, der etwa dem Betätigungskörper 81 entspricht. Ein freier Abschnitt 385 des Betätigungshebels 382 greift in das Kraftübertragungselement 384 ein, so dass es dieses zwischen der Lösestellung L und der Fixierstellung F verstellen kann. Vorzugsweise sind mehrere Betätigungshebel 382 über einen Außenumfang des Betätigungskörpers 381 vorgesehen. Man könnte die Betätigungshebel 382 auch als Kipphebel bezeichnen.

Anhand der Figuren 32 und 33 wird ein motorischer Direktantrieb erläutert, bei dem eine Spindel 386 den Betätigungskörper 81 direkt antreibt. Die Spindel 386 durchdringt beispielsweise eine Bohrung 387 des Betätigungskörpers 81, an deren Innenumfang Windungen für die Spindel 386 vorgesehen sind. Wenn sich die Spindel 386 dreht, verstellt sie den Betätigungskörper 81 entlang der Stellachse B1 direkt nach vorn oder nach hinten. Durch eine periodische Nachtaktung bzw. immer wieder erfolgende Bestromung des Motors 130 in Richtung der Fixierstellung F kann ein fester Sitz der Fixierung sichergestellt werden.

Bei der Variante gemäß Figur 33 treibt die Spindel 386 eine Spindelmutter 388 an, die über eine Feder 389 auf den Betätigungskörper 81 wirkt. Dieser hat beispielsweise eine Aufnahme, in der die Feder 389 aufgenommen ist und an deren Boden sich die Feder 89 einerseits abstützen kann. Andererseits ist die Feder 389 an der Spindelmutter 388 abgestützt. Die Feder 389 beaufschlagt den Betätigungskörper 81 in Richtung der Fixierstellung F und wirkt somit einem unbeabsichtigten Lösen der Fixierung entgegen, beispielsweise wenn sich die Spindelmutter 388 etwas in Richtung der Lösestellung L bewegen würde.

Dieses Konzept mit einem elastischen Kraftspeicher, z.B. einer Feder, der in Richtung der Fixierstellung wirkt, ist im übrigen auch bei den Verriegelungen gemäß Figuren 8-16 realisiert.

Bei der Anhängekupplung 410 ist im Unterschied zu den Anhängekupplungen 10 einen außen liegender Fixierantrieb 480 vorgesehen.

Das Lagerkonzept der Anhängekupplung 410 entspricht im wesentlichen dem bereits erläuterten Lagerkonzept, wobei jedoch der Lagerbasiskörper 433 eine frontseitige oder stirnseitige, becherartige Erweiterung hat, die einen Lagerabschnitt 440 mit der Lagerfläche 437 an ihrem Außenumfang für das Lagerelement 431 bereitstellt. Der Lagerabschnitt 440 hat an seinem freien, dem Deckel 17 gegenüberliegenden Endbereich 438 den größten Durchmesser und verjüngt sich in Richtung eines zylindrischen Tragabschnitts 435 hin, der nach hinten vor das Fahrzeughalterungsteil 421 vorsteht.

Die Lagerelemente 431, 432 weisen eine becherartige Gestalt auf und sind zwischen dem Fahrzeughalterungsteil 421 und dem vorderen, freien Endbereich 438 gelagert und werden somit von dem am Endbereich 438 den größten Durchmesser aufweisenden Lagerabschnitt 440 bezüglich der Schwenkachse S1 ortsfest gehalten.

Der Fixierantrieb 480 treibt von außerhalb des Lagers 430 her ein Fixierelement 460 an, das dem Fixierelement 60 entspricht, in Richtung des Lagerelements 432 und eines Stützteils 450, das dem Stützteil 50 entspricht, in Richtung der Fixierstellung F bzw. davon weg in Richtung einer Lösestellung L, die in gestrichelten Linien dargestellt ist, an. Die Schwenkachse S2 stellt wieder eine Stellachse B1 dar.

An dem Tragabschnitt 435 ist ein Betätigungskörper 481, beispielsweise ein stiftartiger Mitnehmer, in einer Öffnung 483 bezüglich der Stellachse B1 verschieblich gelagert, der mit dem Fixierelement 460 in nicht dargestellter Weise, beispielsweise anhand eines Rohrelements, das entlang der Stellachse B1 auf dem Tragabschnitt 435 des Lagerbasiskörpers 433 verschieblich gelagert ist. Das Rohrelement ist dann mit dem Fixierelement 460 fest verbunden, jedenfalls bezüglich der Stellachse B1.

Ein Längsendbereich 484 des Betätigungskörpers 481 greift in eine Betätigungskulisse 485 ein, die an einem Betätigungskörper 486 vorgesehen ist. Der Betätigungskörper 486 ist durch eine nicht dargestellte Stange oder einen Seilzug oder dergleichen in Richtung einer Stellachse B2 axial hin und her verschieblich. Die Betätigungskulisse 485, in die der Längsendbereich 484 des Betätigungskörpers 481 eingreift, der also einen Kulissenfolger darstellt, bewirkt eine Richtungsumkehr der Betätigungsbewegung. Die Stellachsen B1 und B2 sind nämlich winkelig zueinander, zum Beispiel rechtwinkelig.

Die Betätigungskulisse 485 ist beispielsweise S-förmig, wobei Längsendbereiche der Betätigungskulisse 485 der Fixierstellung F und der Lösestellung L zugeordnet sind.

Durch geeignete Schrägflächen, innerhalb der Betätigungskulisse 485, zum Beispiel in den jeweiligen Längsendbereichen und/oder dem schräg verlaufenden Übergangsbereich zwischen diesen, kann zweckmäßigerweise ein selbsthemmender Effekt erzielt werden, so dass sich die Verriegelung nicht selbsttätig löst.

Der Betätigungskörper 486 ist zweckmäßigerweise durch eine Feder 487 in Richtung der Fixierstellung F angefedert. Der Betätigungskörper 486 ist beispielsweise in einer Schiebelager-Aufnahme 488 entlang der Stellachse B2 verschieblich aufgenommen.

Bei der Anhängekupplung 210 sind die Lagerelemente 231 und 232 bezüglich der Schwenkachse S1 axial verschieblich am Lagerbasiskörper 233 aufgenommen. Die Verstellbewegung, die in Figur 45 durch einen Doppelpfeil F-L (Fixierstellung F und Lösestellung L) dargestellt ist, wird durch den bereits erläuterten Fixierantrieb 80, jedoch in einer etwas vereinfachten Variante, nämlich ohne Löseantrieb, realisiert.

Jedenfalls werden die Übertragungselemente 82 vom Betätigungskörper 81 nach radial außen durch Durchtrittsöffnungen 83 der Hohlwelle 234, die den Lagerbasiskörper 233 darstellt, verdrängt und dringen in Antriebsvertiefungen 286, z.B. Kalotten oder eine Ringnut, am Innenumfang des inneren Lagerelements 231 ein. Dadurch wird dieses axial in Richtung der Stellachse B1 von der Fahrzeughalterung 220 weg verstellt, wodurch Formschlusskonturen 268 und 269 einerseits am Fahrzeughalterungsteil 221 und andererseits an der dieser zugewandten Stirnseite des Lagerelements 232 außer Eingriff gelangen, so dass der Kupplungsarm 11 zwischen der Gebrauchsstellung N und der Nichtgebrauchsstellung B verstellt werden kann.

Selbstverständlich ist auch ein Löseantrieb möglich, wenn zum Beispiel Löse-Übertragungselemente 94, die ihn nicht dargestellten Durchtrittsöffnungen des Lagerbasiskörpers 433 entsprechend den Durchtrittsöffnungen 95 beweglich gelagert sind, durch den Betätigungskörper 81 in Löse-Antriebsvertiefungen 287 am Lagerelement 231 hinein verdrängbar wären, ähnlich wie die bereits erläuterten Löse-Übertragungselemente 94 der Anhängekupplung 10. Mithin ist also auch bei einer nicht kardanischen Lagerung eines Kupplungsarms um mehr als eine Achse ein im Lager angeordneter Löseantrieb realisiert.

Die Formschlusskonturen 268 und die Gegen-Formschlusskonturen 269 entsprechen vorzugsweise etwa den bereits erläuterten Formschlusskonturen 68 und 69. Die Formschlusskonturen 268 und 269 sind also ebenfalls vorzugsweise durch eine Längsgestalt aufweisende Rippen und Aufnahmenuten gebildet oder umfassen solche.

Selbstverständlich könnten aber auch kugelige oder beispielsweise auch bohnenförmige Formschlusskonturen 68 und 69 und/oder 268, 269 vorgesehen sein.

Das Fahrzeughalterungsteil 221 hat zweckmäßigerweise eine Aufnahmevertiefung 264, die etwa der Aufnahmevertiefung 64 des Fixierelements 60 entspricht. Somit verlaufen also auch die Formschlusskonturen 268 und 269 bogenförmig in die Aufnahmevertiefung 264 hinein, was für einen optimalen Formschluss-Effekt sorgt.

Die Rippen 71 und zugeordneten Aufnahmenuten 76 stellen nur eine Variante von zueinander passenden Formschlusskonturen dar. Alternativ sind beispielsweise auch Kugeln 671 denkbar (Figur 40), die sich beispielsweise an der Stirnseiten-Stützfläche 67 befinden, und zum Eingriff in kugelige Aufnahmen 676, 677 eignen, die am Stützteil 50 und/oder am Lagerelement 32, 432, 232 vorgesehen sind.

## Patentansprüche

1. Anhängekupplung für ein Kraftfahrzeug (K), mit einem Kupplungsarm (11) zum Ankuppeln eines Anhängers oder eines Hecklastenträgers, wobei der Kupplungsarm (11) an einer an dem Kraftfahrzeug (K) befestigbaren Fahrzeughalterung (20; 420; 220) anhand eines an der Fahrzeughalterung (20; 420; 220) angeordneten Lagers zwischen einer zum Anhängen des Anhängers oder des Hecklastenträgers vorgesehenen Gebrauchsstellung (G) und einer zum Kraftfahrzeug (K) näher hin verstellten Nichtgebrauchsstellung (N) gelagert ist, wobei an einem zur Befestigung an dem Kraftfahrzeug (K) vorgesehenen Fahrzeughalterungsteil (21; 421; 221) der Fahrzeughalterung (20; 420; 220) ein Lagerbasiskörper (33) des Lagers ortsfest angeordnet ist, an dem mindestens ein Lagerelement (32, 432; 232), das den Kupplungsarm (11) trägt, beweglich gelagert ist, wobei die Anhängekupplung eine Fixiereinrichtung zum ortsfesten Fixieren des Kupplungsarms (11) in der Gebrauchsstellung (G) und/oder der Nichtgebrauchsstellung (N) aufweist, wobei die Fixiereinrichtung mindestens ein Fixierelement (60) aufweist, das durch eine insbesondere lineare Verstellung entlang einer Stellachse (B1), insbesondere einer Schwenkachse des Lagers, zwischen einer zum Fixieren des Kupplungsarms (11) vorgesehenen Fixierstellung (F), in der das Fixierelement (60) in einem formschlüssigen Eingriff mit mindestens einem Gegenhaltkörper ist, und einer Lösestellung (L), in welcher der Kupplungsarm (11) beweglich ist, und wobei das Fixierelement (60) und der mindestens eine Gegenhaltkörper in einem Winkelabstand zueinander beabstandete Formschlusskonturen (68) und Gegen-Formschlusskonturen (69, 70) aufweisen, das Fixierelement (60) ein zu dem Fahrzeughalterungsteil (21; 421; 221) und dem Lagerelement (32, 432; 232), das den Kupplungsarm (11) trägt, relativ bewegliches Bauteil bildet, **dadurch gekennzeichnet, dass** das Fixierelement (60) mit dem den Kupplungsarm tragenden Lagerelement (32, 432; 232) bewegungsgekoppelt ist, so dass das Fixierelement (60) bei einer Bewegung des Lagerelements (32, 432; 232) von diesem mitgenommen wird.

2. Anhängekupplung nach Anspruch 1, **dadurch gekennzeichnet, dass** das Fixierelement (60) oder der mindestens eine Gegenhaltkörper eine Aufnahmevertiefung (64), insbesondere eine Aufnahmemulde, für einen Eingriff des jeweils anderen Elements von Gegenhaltkörper oder Fixierelement (60) aufweist, wobei sich vorteilhaft von der Aufnahmevertiefung (64) des Fixierelements (60) ein insbesondere ringförmiger Stützkragen erstreckt.

3. Anhängekupplung nach Anspruch 2, **dadurch gekennzeichnet, dass** sich die insbesondere als Rippen (71) und Aufnahmenuten ausgestalten Formschlusskonturen (68) und Gegen-Formschlusskonturen (69, 70) zumindest teilweise in der Aufnahmevertiefung (64) und/oder an einer sich neben der Aufnahmevertiefung (64) befindlichen Stirnseiten-Stützfläche (67) des Fixierelements (60) oder des Gegenhaltkörpers befinden und/oder sich über einen Kantenbereich (72) zwischen der Aufnahmevertiefung (64) und einer sich neben der Aufnahmevertiefung (64) befindlichen Stirnseiten-Stützfläche (67) hinweg erstrecken, wobei der Kantenbereich (72) vorteilhaft eine Rundung und/oder die sich über den Kantenbereich (72) erstreckende Rippe (71) oder Aufnahmenut eine oberseitige oder bodenseitige Rundung aufweist.

4. Anhängekupplung nach einem der vorhergehenden Ansprüche, **dadurch gekennzeichnet, dass** das Fixierelement (60) und/oder ein Stützteil (50) des Fahrzeug-Halteteils eine Durchtrittsöffnung (48) für den Lagerbasiskörper (33), insbesondere eine Lagerwelle oder Hohlwelle (34), aufweist.

5. Anhängekupplung nach einem der vorhergehenden, **dadurch gekennzeichnet, dass** die Formschlusskonturen (68) und Gegen-Formschlusskonturen (69, 70) eine Längsgestalt aufweisende Rippen (71) und Aufnahmenuten zur Aufnahme der Rippen (71) und/oder kugelförmige Vorsprünge und kugelförmige Aufnahmen zur Aufnahme der kugelförmigen Vorsprünge umfassen.

6. Anhängekupplung nach Anspruch 5, **dadurch gekennzeichnet, dass** die Rippen (71) und Aufnahmenuten quer, insbesondere radial, zu der Stellachse (B1) verlaufen und/oder einen bezüglich einer von der Stellachse (B1) durchsetzten Ebene gekrümmten oder winkeligen Verlauf haben und/oder quer zu mindestens einer Schwenkachse, um die der Kupplungsarm (11) bezüglich der Fahrzeughalterung (20; 420; 220) zur Verstellung zwischen der Gebrauchsstellung (G) und der Nichtgebrauchsstellung (N) schwenkt, quer verlaufende Seitenflanken (75, 78) aufweisen und/oder dass die Rippen (71) und/oder die Aufnahmenuten einen U-förmigen Querschnitt aufweisen und/oder zu einem Längsendbereich hin flach gegenüber einer benachbarten Fläche auslaufen.

7. Anhängekupplung nach einem der vorhergehenden Ansprüche, **dadurch gekennzeichnet, dass** die insbesondere als Rippen (71) und Aufnahmenuten ausgestalten Formschlusskonturen (68) und Gegen-Formschlusskonturen (69, 70) so an dem Fixierelement (60) und dem Gegenhaltkörper angeordnet und/oder geometrisch so ausgestaltet sind, dass sie nur in einer der Gebrauchsstellung (G) und/oder der Nichtgebrauchsstellung (N) entsprechenden Position von Fixierelement (60) und Gegenhaltkörper ineinander passen und in dazwischen liegenden Zwischenstellungen eine Verstellung des Fixierelements (60) und des Gegenhaltkörpers zueinander hin in Richtung der Fixierstellung (F) verhindern.

8. Anhängekupplung nach einem der vorhergehenden Ansprüche, **dadurch gekennzeichnet, dass** die insbesondere als Rippen (71) und Aufnahmenuten ausgestalten Formschlusskonturen (68) und Gegen-Formschlusskonturen (69, 70) im Sinne eines Zentrierens des den Kupplungsarm (11) tragenden Lagerelements (32, 432; 232) in der Fixierstellung (F) wirken, wobei die Formschlusskonturen (68) und/oder die Gegen-Formschlusskonturen (69, 70), vorteilhaft bezüglich der Stellachse (B1) einen trichterförmigen oder konischen Schrägverlauf aufweisen.

9. Anhängekupplung nach einem der vorhergehenden Ansprüche, **dadurch gekennzeichnet, dass** der mindestens eine Gegenhaltkörper das den Kupplungsarm (11) tragende Lagerelement (32, 432; 232) und/oder ein Stützteil (50) des Fahrzeughalteteils umfasst.

10. Anhängekupplung nach einem der vorhergehenden Ansprüche, **dadurch gekennzeichnet, dass** das mindestens eine Fixierelement (60) mit einer einzigen Formschlusskontur (68) in Abschnitte zweier Gegen-Formschlusskonturen (69, 70) an zwei Gegenhaltkörpern oder eine durch zwei Abschnitte an den Gegenhaltkörper gebildete Gegen-Formschlusskontur (69, 70) eingreift.

11. Anhängekupplung nach einem der vorhergehenden Ansprüche, **dadurch gekennzeichnet, dass** das mindestens eine Fixierelement (60) mit zwei Gegenhaltkörpern (32, 50) zusammenwirkt, wobei das Fixierelement (60) in der Fixierstellung (F) mit einem ersten Gegenhaltkörper (32) zusammenwirkend eine, insbesondere Schrägflächen zum Klemmen des zweiten Gegenhaltkörpers (50) aufweisende, Klemmaufnahme für den zweiten Gegenhaltkörper (50) begrenzt.

12. Anhängekupplung nach einem der vorhergehenden Ansprüche, **dadurch gekennzeichnet, dass** das mindestens eine Fixierelement (60) an dem ersten Gegenhaltkörper (32) direkt anliegt und/oder die Formschlusskonturen des mindestens einen Fixierelements (60) in an nur einem der Gegenhaltkörper (50) vorgesehene Gegen-Formschlusskonturen (69) oder in an beiden Gegenhaltkörpern (50, 32) vorgesehene Gegen-Formschlusskonturen (69, 70) eingreift, wobei mindestens einer der Gegenhaltkörper (50,32) vorzugsweise in einem Winkelabstand zueinander beabstandete Gegen-Formschlusskonturen (69, 70) aufweist.

13. Anhängekupplung nach einem der vorhergehenden Ansprüche, **dadurch gekennzeichnet, dass** eine an dem mindestens einen Fixierelement (60) vorgesehene Rippe (71) oder eine am Fixierelement (60) vorgesehene Aufnahmenut mit einer Aufnahmenut oder Aufnahmerippe (71) formschlüssig zusammenwirkt, die durch ineinander übergehende Aufnahmenut-Abschnitte oder Aufnahmerippen (71)-Abschnitte an einem ersten und einem zweiten Gegenhaltkörper, insbesondere dem Lagerelement (32, 432; 232) oder einem Stützteil (50) des Fahrzeughalteteils, gebildet ist.

14. Anhängekupplung nach einem der vorhergehenden Ansprüche, **dadurch gekennzeichnet, dass** das mindestens eine Fixierelement (60) und der mindestens eine Gegenhaltkörper einen Ring oder eine Hülse oder einen Plattenkörper umfassen.

15. Anhängekupplung nach einem der vorhergehenden Ansprüche, **dadurch gekennzeichnet, dass** das Fahrzeug-Halteteil ein insbesondere flanschartiges und/oder plattenartiges Stützteil (50) umfasst, das in der Fixierstellung (F) zwischen dem Fixierelement (60) und dem mindestens einen Gegenhaltkörper oder dem den Kupplungsarm (11) tragenden Lagerelement (32, 432; 232) gehalten, insbesondere geklemmt, wird, und/oder dass die Fixiereinrichtung eine Zangenhalterung umfasst, die einen ersten, von dem mindestens einen Fixierelement (60) gebildeten Zangenschenkel (61) und einen zweiten, insbesondere von dem den Kupplungsarm (11) tragenden Lagerelement (32, 432; 232), gebildeten Zangenschenkel (62) aufweist, die in der Fixierstellung (F) aufeinander zu bewegt sind und das Lagerelement (32, 432; 232) an der fahrzeugfesten Fahrzeughalterung (20; 420; 220) fixieren.

## Claims

1. Trailer coupling for a motor vehicle (K), with a coupling arm (11) for coupling-on a trailer or a rear load carrier, wherein the coupling arm (11) is mounted on a vehicle mounting (20; 420; 220), attachable to the motor vehicle (K) with the aid of a bearing provided on the vehicle mounting (20; 420; 220), between a position of use (G) provided for the attachment of the trailer or the rear load carrier and an inoperative position (N) shifted closer to the motor vehicle (K), wherein there is fixed immovably to a vehicle mounting part (21; 421; 221) of the vehicle mounting (20; 420; 220) provided for attachment to the motor vehicle (K) a bearing base body (33) of the bearing on which is movably mounted at least one bearing element (32; 432, 232) carrying the coupling arm (11), wherein the trailer coupling has a fixing device for immovable fixing of the coupling arm (11) in the position of use (G) and/or the inoperative position (N), wherein the fixing device has at least one fixing element (60), which may be moved by adjustment, in particular linear, along an adjusting axis (B1), in particular a swivel axis of the bearing, between a fixing position (F) provided for fixing of the coupling arm (11), in which the fixing element (60) makes form-fitting engagement with at least one mating holding element, and a release position (L), in which the coupling arm (11) is movable, and wherein the fixing element (60) and the mating holding element or elements have interlocking contours (68) and mating interlocking contours (69, 70) with angular clearance from one another, the fixing element (60) forms a component which is movable relative to the vehicle mounting part (21; 421; 221) and the bearing element (32; 432, 232) which supports the coupling arm, **characterised in that** the fixing element (60) is movement-coupled to the bearing element (32; 432, 232) carrying the coupling arm, so that the fixing element (60), during any movement of the bearing element (32; 432, 232), is carried along with it.

2. Trailer coupling according to claim 1, **characterised in that** the fixing element (60) or the mating holding element or elements has or have a locating recess (64), in particular a locating trough, for engagement of the other respective element of mating holding element or fixing element (60), wherein advantageously a support collar, in particular annular, extends from the locating recess (64) of the fixing element (60).

3. Trailer coupling according to claim 2, **characterised in that** the interlocking contours (68) and mating interlocking contours (69, 70), in particular in the form of ribs (71) and locating slots, are located at least partly in the locating recess (64) and/or on an end face support surface (67) of the fixing element (60) or the mating holding element located next to the locating recess (64), and/or extend over an edge section (72) between the locating recess (64) and an end face support surface (67) located next to the locating recess (64), wherein the edge section (72) advantageously has a rounding and/or the rib (71) or locating slot extending over the edge section (72) has a top or bottom rounding.

4. Trailer coupling according to any of the preceding claims, **characterised in that** the fixing element (60) and/or a support section (50) of the vehicle mounting part has or have a through hole (48) for the bearing base body (33), in particular a bearing shaft or hollow shaft (34).

5. Trailer coupling according to any of the preceding claims, **characterised in that** the interlocking contours (68) and the mating interlocking contours (69, 70) include ribs (71) with a longitudinal shape and locating slots to hold the ribs (71), and/or spherical projections and spherical sockets to hold the spherical projections.

6. Trailer coupling according to claim 5, **characterised in that** the ribs (71) and sockets run transversely, in particular radially, to the adjusting axis (B1) and/or have a curved or angled course relative to a plane through which the adjusting axis (B1) passes, and/or have side flanks (75, 78) running transversely to at least one swivel axis around which the coupling arm (11) swivels relative to the vehicle mounting (20; 420; 220) for the adjustment between the position of use (G) and the inoperative position (N), and/or that the ribs (71) and/or the locating slots have a U-shaped cross-section and/or run out to a longitudinal end section, flat in comparison with an adjacent surface.

7. Trailer coupling according to any of the preceding claims, **characterised in that** the interlocking contours (68) and mating interlocking contours (69, 70), in particular in the form of ribs (71) and locating slots, are so arranged on the fixing element (60) and the mating holding element and/or geometrically so designed that they fit into one another only in a position of fixing element (60) and mating holding element corresponding to the position of use (G) and/or the inoperative position (N) and, in intermediate positions, prevent adjustment of the fixing element (60) and the mating holding element towards one another in the direction of the fixing position (F).

8. Trailer coupling according to any of the preceding claims, **characterised in that** the interlocking contours (68) and mating interlocking contours (69, 70), in particular in the form of ribs (71) and locating slots, act for the purpose of centring in the fixing position (F) the bearing element (32; 432, 232) carrying the coupling arm (11), wherein the interlocking contours (68) and mating interlocking contours (69, 70) advantageously have a funnel-shaped or conical inclined course relative to the adjusting axis (B1).

9. Trailer coupling according to any of the preceding claims, **characterised in that** the mating holding element or elements include the bearing element (32; 432, 232) carrying the coupling arm (11) and/or a support section (50) of the vehicle mounting part.

10. Trailer coupling according to any of the preceding claims, **characterised in that** the fixing element or elements (60) engages or engage with a single interlocking contour (68) in sections of two mating interlocking contours (69, 70) at two mating holding elements or one mating interlocking contour (69, 70) formed by two sections on the mating holding element.

11. Trailer coupling according to any of the preceding claims, **characterised in that** the fixing element or elements (60) acts or act in conjunction with two mating holding elements (32, 50), wherein the fixing element (60) in the fixing position (F), cooperating with a first mating holding element (32), bounds a clamping location for the second mating holding element (50) and has in particular inclined surfaces for clamping the second mating holding element (50).

12. Trailer coupling according to any of the preceding claims, **characterised in that** the fixing element or elements (60) directly abuts or abut the first mating holding element (32) and/or the interlocking contours of the fixing element or elements (60) engage in mating interlocking contours (69) provided on only one of the mating holding elements (50) or in mating interlocking contours (69, 70) provided on both mating holding elements (50, 32), wherein at least one of the both mating holding elements (50, 32) preferably has mating interlocking contours (69, 70) with angular clearance from one another.

13. Trailer coupling according to any of the preceding claims, **characterised in that** a rib (71) provided on the fixing element or elements (60) or a locating slot provided on the fixing element (60) act positively in conjunction with a locating slot or locating rib (71) which is formed by locating slot sections or locating rib (71) sections merging into one another at a first and a second mating holding element, in particular the bearing element (32; 432, 232) or a support section (50) of the vehicle mounting part.

14. Trailer coupling according to any of the preceding claims, **characterised in that** the fixing element or elements (60) and the mating holding element or elements include a ring or a sleeve or a plate body.

15. Trailer coupling according to any of the preceding claims, **characterised in that** the vehicle mounting part includes a support section (50), in particular flange-like and/or platelike, which is held, in particular clamped in the fixing position (F) between the fixing element (60) and the mating holding element or elements or the bearing element (32; 432, 232) supporting the coupling arm (11), and/or that the fixing device includes a pliers holder which has a first pliers jaw (61) formed by the fixing element or elements (60) and a second pliers jaw (62) formed in particular by the bearing element (32; 432, 232) supporting the coupling arm (11), which in the fixing position (F) are moved together and fix the bearing element (32; 432, 232) on the vehicle mounting (20; 420; 220) fixed to the vehicle.

## Revendications

1. Attelage de remorque pour un véhicule automobile (K), comprenant un bras d'attelage (11) servant à accoupler une remorque ou un support de charges arrière, dans lequel le bras d'attelage (11) est monté au niveau d'un support de véhicule (20 ; 420 ; 220) pouvant être fixé au niveau du véhicule automobile (K), à l'aide d'un palier disposé au niveau du support de véhicule (20 ; 420 ; 220) entre une position d'utilisation (G) prévue pour accrocher la remorque ou le support de charges arrière et une position de non-utilisation (N) ajustée davantage à proximité du véhicule automobile (K), dans lequel est disposé de manière stationnaire, au niveau d'une partie de support de véhicule (21 ; 421 ; 221), prévue pour être fixée au niveau du véhicule automobile (K), du support de véhicule (20 ; 420 ; 220), un corps de base de palier (33) du palier, au niveau duquel au moins un élément de palier (32, 432 ; 232), qui supporte le bras d'attelage (11), est monté de manière mobile, dans lequel l'attelage de remorque présente un dispositif de blocage servant à bloquer de manière stationnaire le bras d'attelage (11) dans la position d'utilisation (G) et/ou dans la position de non-utilisation (N), dans lequel le dispositif de blocage présente au moins un élément de blocage (60), qui est monté de manière mobile par un ajustement en particulier linéaire le long d'un axe de réglage (B1), en particulier d'un axe de pivotement du palier, entre une position de blocage (F) prévue aux fins du blocage du bras d'attelage (11), dans laquelle l'élément de blocage (60) est en prise par complémentarité de forme avec au moins un corps de contre-maintien, et une position de déblocage (L), dans laquelle le bras d'attelage (11) est mobile, et dans lequel l'élément de blocage (60) et l'au moins un corps de contre-maintien présentent des contours à complémentarité de forme (68) et des contre-contours à complémentarité de forme (69, 70) espacés les uns des autres selon une distance angulaire, l'élément de blocage (60) forme un composant relativement mobile par rapport à la partie de support de véhicule (21 ; 421 ; 221) et à l'élément de palier (32, 432; 232), qui supporte le bras d'attelage (11), **caractérisé en ce que** l'élément de blocage (60) est couplé en déplacement avec l'élément de palier (32, 432 ; 232) supportant le bras d'attelage de sorte que l'élément de blocage (60) est entraîné par l'élément de palier (32, 432 ; 232) lors d'un déplacement de ce dernier.

2. Attelage de remorque selon la revendication 1, **caractérisé en ce que** l'élément de blocage (60) ou l'au moins un corps de contre-maintien présentent un renfoncement de logement (64), en particulier une cavité de logement, en vue d'une prise de l'autre élément respectivement parmi le corps de contre-maintien ou l'élément de blocage (60), dans lequel une collerette de soutien en particulier de forme annulaire s'étend de manière avantageuse depuis le renfoncement de logement (64) de l'élément de blocage (60).

3. Attelage de remorque selon la revendication 2, **caractérisé en ce que** les contours à complémentarité de forme (68) et les contre-contours à complémentarité de forme (69, 70) configurés en particulier sous la forme de nervures (71) et de rainures de logement se trouvent au moins en partie dans le renfoncement de logement (64) et/ou au niveau d'une surface de soutien de côtés frontaux (67), se trouvant à côté du renfoncement de logement (64), de l'élément de blocage (60) ou du corps de contre-maintien et/ou s'étendent au-delà d'une zone d'arête (72) entre le renfoncement de logement (64) et une surface de soutien de côtés frontaux (67) se trouvant à côté du renfoncement de logement (64), dans lequel la zone d'arête (72) présente de manière avantageuse un arrondi et/ou la nervure (71) ou la rainure de logement s'étendant au-delà de la zone d'arête (72) présente un arrondi du côté supérieur ou du côté du fond.

4. Attelage de remorque selon l'une quelconque des revendications précédentes, **caractérisé en ce que** l'élément de blocage (60) et/ou une partie de soutien (50) de la partie de maintien de véhicule présentent une ouverture de passage (48) pour le corps de base de palier (33), en particulier pour un arbre de palier ou un arbre creux (34).

5. Attelage de remorque selon l'une quelconque des revendications précédentes, **caractérisé en ce que** les contours à complémentarité de forme (68) et les contre-contours à complémentarité de forme (69, 70) comprennent des nervures (71) présentant une forme en longueur et des rainures de logement servant à loger les rainures (71) et/ou des parties faisant saillie de forme sphérique et des logements de forme sphérique servant à loger les parties faisant saillie de forme sphérique.

6. Attelage de remorque selon la revendication 5, **caractérisé en ce que** les nervures (71) et les rainures de logement s'étendent de manière transversale, en particulier de manière radiale, par rapport à l'axe de réglage (B1) et/ou ont un profil incurvé ou angulaire par rapport à un plan traversé par l'axe de réglage (B1) et/ou présentent des flancs latéraux (75, 78) s'étendant de manière transversale par rapport à au moins un axe de pivotement, autour duquel le bras d'attelage (11) pivote par rapport au support de véhicule (20 ; 420 ; 220) aux fins de l'ajustement entre la position d'utilisation (G) et la position de non-utilisation (N), et/ou que les nervures (71) et/ou les rainures de logement présentent une section transversale en forme de U et/ou se terminent à plat par rapport à une surface adjacente en direction d'une zone d'extrémité longitudinale.

7. Attelage de remorque selon l'une quelconque des revendications précédentes, **caractérisé en ce que** les contours à complémentarité de forme (68) et les contre-contours à complémentarité de forme (69, 70) configurés en particulier sous la forme de nervures (71) et de rainures de logement sont disposés de telle sorte au niveau de l'élément de blocage (60) et du corps de contre-maintien et/ou sont configurés de manière géométrique de sorte qu'ils s'adaptent l'un dans l'autre seulement dans une position de l'élément de blocage (60) et du corps de contre-maintien correspondant à la position d'utilisation (G) et/ou à la position de non-utilisation (N) et empêchent dans des positions intermédiaires intercalées un ajustement de l'élément de blocage (60) et du corps de contre-maintien l'un vers l'autre en direction de la position de blocage (F).

8. Attelage de remorque selon l'une quelconque des revendications précédentes, **caractérisé en ce que** les contours à complémentarité de forme (68) et les contre-contours à complémentarité de forme (69, 70) configurés en particulier sous la forme de nervures (71) et de rainures de logement agissent dans la position de blocage (F) au sens d'un centrage de l'élément de palier (32, 432 ; 232) supportant le bras d'attelage (11), dans lequel les contours à complémentarité de forme (68) et/ou les contre-contours à complémentarité de forme (69, 70) présentent de manière avantageuse par rapport à l'axe de réglage (B1) un profil oblique en forme d'entonnoir ou conique.

9. Attelage de remorque selon l'une quelconque des revendications précédentes, **caractérisé en ce que** l'au moins un contre-corps de maintien comprend l'élément de palier (32, 432 ; 232) supportant le bas d'attelage (11) et/ou une partie de soutien (50) de la partie de maintien de véhicule.

10. Attelage de remorque selon l'une quelconque des revendications précédentes, **caractérisé en ce que** l'au moins un élément de blocage (60) vient en prise par un unique contour à complémentarité de forme (68) avec des sections de deux contre-contours à complémentarité de forme (69, 70) au niveau de deux contre-corps de maintien ou avec un contre-contour à complémentarité de forme (69, 70) formé par deux sections au niveau du contre-corps de maintien.

11. Attelage de remorque selon l'une quelconque des revendications précédentes, **caractérisé en ce que** l'au moins un élément de blocage (60) coopère avec deux contre-corps de maintien (32, 50), dans lequel l'élément de blocage (60) délimite, en coopérant avec un premier contre-corps de maintien (32) dans la position de blocage (F), un logement de serrage, présentant en particulier des surfaces obliques servant à serrer le deuxième contre-corps de maintien (50) pour le deuxième contre-corps de maintien (50).

12. Attelage de remorque selon l'une quelconque des revendications précédentes, **caractérisé en ce que** l'au moins un élément de blocage (60) repose directement au niveau du premier contre-corps de maintien (32), et/ou les contours à complémentarité de forme de l'au moins un élément de blocage (60) viennent en prise avec des contre-contours à complémentarité de forme (69) prévus au niveau seulement d'un des contre-corps de maintien (50) ou avec des contre-contours à complémentarité de forme (69, 70) prévus au niveau des deux contre-corps de maintien (50, 32), dans lequel au moins un des contre-corps de maintien (50, 32) présente des contre-contours à complémentarité de forme (69, 70) espacés les uns des autres de préférence selon une distance angulaire.

13. Attelage de remorque selon l'une quelconque des revendications précédentes, **caractérisé en ce qu'**une nervure (71) prévue au niveau de l'au moins un élément de blocage (60) ou une rainure de logement prévue au niveau de l'élément de blocage (60) coopère par complémentarité de forme avec une rainure de logement ou une nervure de logement (71), qui est formée par des sections de rainure de logement ou des sections de nervures de logement (71) se confondant les unes dans les autres au niveau d'un premier et d'un deuxième contre-corps de maintien, en particulier de l'élément de palier (32, 432 ; 232) ou d'une partie de soutien (50) de la partie de maintien de véhicule.

14. Attelage de remorque selon l'une quelconque des revendications précédentes, **caractérisé en ce que** l'au moins un élément de blocage (60) et l'au moins un contre-corps de maintien comprennent une bague ou une douille ou un corps de plaque.

15. Attelage de remorque selon l'une quelconque des revendications précédentes, **caractérisé en ce que** la partie de maintien de véhicule comprend une partie de soutien (50) en particulier de type bride et/ou de type plaque, qui est maintenue, en particulier serrée, dans la position de blocage (F) entre l'élément de blocage (60) et l'au moins un contre-corps de maintien ou l'élément de palier (32, 432 ; 232) supportant le bras d'attelage (11), et/ou que le dispositif de blocage comprend un support à pince, qui présente une première branche de pince (61) formée par l'au moins un élément de blocage (60) et une seconde branche de pince (62) formée en particulier par l'élément de palier (32, 432; 232) supportant le bras d'attelage (11), lesquelles sont déplacées l'une vers l'autre dans la position de blocage (F) et bloquent l'élément de palier (32, 432 ; 232) au niveau du support de véhicule (20 ; 420 ; 220) solidaire du véhicule.
